# EUROPÄISCHE PATENTSCHRIFT

(11) **EP 1 879 821 B1**
(45) Veröffentlichungstag und Bekanntmachung des Hinweises auf die Patenterteilung: **31.03.2010**
(21) Anmeldenummer: 06742839.1
(22) Anmeldetag: 09.05.2006
(51) Int. Cl.: B65G 63/02

(54) **VERFAHREN UND UMLADESYSTEM ZUM UM-BZW. VERLADEN VON MINDESTENS EINER LADEEINHEIT**
METHOD AND TRANSHIPPING SYSTEM FOR TRANSHIPPING OR LOADING AT LEAST ONE LOADING UNIT
PROCEDE ET SYSTEME DE TRANSBORDEMENT SERVANT AU TRANSBORDEMENT OU AU CHARGEMENT D'AU MOINS UNE UNITE DE CHARGEMENT

(30) Priorität: 11.05.2005 AT 8062005
(43) Veröffentlichungstag der Anmeldung: 23.01.2008
(73) Patentinhaber: Unseld, Hans G., 1080 Wien (AT)
(72) Erfinder: Unseld, Hans G., 1080 Wien (AT)
(74) Vertreter: Krause, Peter
(86) Internationale Anmeldenummer: PCT/EP2006/004302
(87) Internationale Veröffentlichungsnummer: WO 2006/119955

(56) Entgegenhaltungen:
- WO-A-93/04962
- WO-A-97/03014
- US-A1- 2004 081 540
- PATENT ABSTRACTS OF JAPAN Bd. 2002, Nr. 02, 2. April 2002 (2002-04-02) -& JP 2001 301986 A (MURATA MACH LTD), 31. Oktober 2001 (2001-10-31)

## Beschreibung

Die Erfindung betrifft ein Verfahren zum Um- bzw. Verladen von mindestens einer Ladeeinheit, insbesondere eines Containers oder einer Wechselbrücke, von einem Eisenbahnwaggon auf einen anderen oder von einem Eisenbahnwaggon auf ein Fahrzeug, insbesondere einen Lastkraftwagen, oder einen Abstellplatz oder von einem Fahrzeug auf ein weiteres Fahrzeug oder einen Abstellplatz oder umgekehrt. Ferner betrifft die Erfindung ein Umladesystem zur Durchführung des Verfahrens und einen Terminal.

Eine der Voraussetzungen für eine florierende Wirtschaft sind effiziente und kostengünstige Transportkapazitäten. Der Warentransport kann mit Luftfracht, Transport auf dem Wasserweg, auf Strassen oder Schienen erfolgen. Obwohl jedes der vier Transportmedien seine Vor- u. Nachteile hat, kommt sowohl die Luftfracht als auch - zumindest in Mitteleuropa - der Transport auf dem Wasserwege nur in Sonderfällen zum Einsatz.

Der größte Teil der Waren wird auf der Strasse transportiert und führt wegen der Lärm- u. Schadstoffemissionen der LKW zu großen Problemen bei den Bewohnern betroffener Regionen bzw. der Umwelt. Im innerstädtischen Bereich und im Nahverkehr gibt es wegen der Verkehrsinfrastruktur leider keine vernünftige Alternative zum Straßentransport. Es hat zum Beispiel weder der Absender der Waren noch der Empfänger einen Gleisanschluss. Ab einer bestimmten Distanz zwischen Absender und Empfänger bietet sich aber - zumindest theoretisch - der Bahntransport als Alternative an.

Das zweimalige Umladen, nämlich vom Zubringerfahrzeug auf den Waggon und am Zielbahnhof vom Waggon auf den LKW, wird durch das Freiwerden von LKW und Fahrer während der Stunden des Bahntransportes kompensiert. Der LKW kann in dieser Zeit zusätzliche Transporte durchführen. Dass es in der Praxis aber nicht so ist, zeigen die Transportstatistiken und hat mehrere Gründe.

Der Hauptgrund dafür ist, dass es bis jetzt nicht gelungen ist Umladevorrichtungen zu entwickeln, die rasch, sicher und preisgünstig die Waren vom LKW auf den Waggon und umgekehrt befördern können. Vor allem ist es bis jetzt nicht wirtschaftlich möglich, Waren zwischen dem Ausgangsbahnhof und Zielbahnhof zu- oder abzuladen. Dadurch sind automatisch alle Waren, die Empfänger zwischen dem Ausgangsbahnhof und Zielbahnhof haben, vom Bahntransport ausgeschlossen.

Mit dem Einsatz von Transportbehältern, wie Container oder Wechselaufbauten beim LKW, in denen sich die zu transportierenden Waren befinden, wie beispielsweise Stückgut, das nicht mehr einzeln umgeladen werden muss, wurde ein Schritt in die richtige Richtung gemacht. Trotzdem blieb der Bahntransport für die meisten Speditionen aus Kosten- und Termingründen uninteressant. Es hat daher bis heute zahlreiche Entwicklungen gegeben, den Umladevorgang durch geeignete Einrichtungen so zu verbessern, dass sich der Bahntransport zu einer echten Alternative zum Transport auf der Straße, zumindest bei größeren Entfernungen, entwickeln kann.

Bekannt sind beispielsweise sogenannte Containerkrane zum Umladen von Ladeeinheiten, wie beispielsweise Container, Wechselbehältern oder Wechselaufbauten vom LKW auf Eisenbahnwaggons oder umgekehrt bzw. zum Zwischenlagern etwa durch Stapeln übereinander auf dafür reservierten Flächen. Containerkrane sind riesige Portalkrane, auch Brückenkrane genannt, die die Ladeeinheiten nach oben heben und durch Verfahren des gesamten Kranes und der Krankatze die Ladeeinheiten positionieren. Obwohl die Anlagen meist schon mit automatischen Lastgreifern oder Containerliftern ausgestattet sind, die ohne Positionierhilfen vom Helfer die Last an den dafür vorgesehenen Aufhängevorrichtungen aufheben, sind für den reibungsfreien Betrieb mindestens zwei Personen erforderlich. Einmal der Kranfahrer und dann mindestens eine weitere Person am Boden, die den Kranfahrer einweist, da der Kranfahrer von oben nicht die Nummern übereinander gestapelter Ladeeinheiten erkennen kann.

Diese Containerkrane haben sich im Schiffsumladebetrieb und bei Containerterminals in wichtigen Güterverteilzentren bewährt. Diese Anlagen sind sehr teuer und lohnen sich nur bei entsprechender Auslastung. Dadurch bilden sich wenige, sehr große Umschlagzentren an denen die Ladeeinheiten gelagert, verladen oder umgelagert werden. Diese großen Verteilzentren haben aber gravierende, systembedingte Nachteile. Da sie die Transportströme bündeln, haben sie hohe Durchlaufzeiten, brauchen viel Platz und sind daher sowohl bei den Investitionskosten als auch im Betreib sehr teuer.

Für den Umladebetrieb bei der Bahn sind sie zusätzlich wegen der elektrischen Fahrdrähte, die das Heben unmöglich machen, nicht besonders geeignet. Man kann zwar die Oberleitungen im Bereich des Kranes weglassen, allerdings ist dann eine ständig einsatzbereite Diesellok erforderlich, um die Waggons rangieren zu können. Dadurch wird weiteres teures Equipment und Zusatzpersonal notwendig. Dieser Aufwand rechnet sich meistens nur in Endbahnhöfen bestimmter europäischer Fernverbindungen. Für die Zu- u. Abladung von Ladeeinheiten zwischen diesen Endbahnhöfen ist der Aufwand einfach zu groß.

So ist aus der US 2004/081540 A1 ein Verladesystem und ein Ladewagen für dieses Verladesystem bekannt. Der Ladewagen dient zum Verladen einer Ladung von einer Bereitstellungszone zu einer Zielzone. Der Ladewagen ist entlang einer Fahrtrichtung hin und her verfahrbar und weist mindestens ein in einer quer zur Fahrtrichtung liegenden Laderichtung aus- und einfahrbare Verlademittel auf, wobei das Verlademittel eine anhebbare und absenkbare Tragfläche aufweist, mit der das Verlademittel unter Stützflächen der Ladung verfahrbar ist. Bei diesem Verladesystem wird das Verlademittel unter die Ladung ausgefahren, die Ladung mit dem Verlademittel angehoben und die Ladung in die neue Position bewegt. Anschließend kann das Verlademittel wieder in seine Bereitschaftsstellung eingefahren werden. Um die Verlademittel, im Dokument Skates genannt, unter die in dem Waggon befindliche Ladung bzw. den sie aufnehmenden Ladungsträger verfahren zu können, weist der Ladungsträger entsprechende Ausnehmungen auf. Es sind also für dieses Ladesystem entsprechend konstruierte Ladungsträger notwendig.

Bekannt sind auch konstruktive Umgestaltungen der Containerkrane, wie z. B. in der DE 33 39 092 C2 beschrieben. Bei der darin beschriebenen Vorrichtung zum Transportieren von Containern zwischen Containerlagern und mindestens einem verfahrbaren Brückenkran und Umschlag der Container vom Kran zu einer Transporteinrichtung und umgekehrt, wird im Wesentlichen die Reichweite des fahrbare Kran durch einen langen Ausleger entsprechend vergrößert. Die prinzipiellen Nachteile der Containerkrane beim Güterumschlag wie hohe Investitions- u. Betriebskosten, großer Platzbedarf, lange Durchlaufzeiten und Behinderung durch den elektrischen Fahrdraht werden durch diese Lösung nicht beeinflusst.

Auch die DE 44 44 418 C1 beschreibt eine Anlage zum Schnellumschlagen von Transportgut, insbesondere von Ladeeinheiten für den kombinierten Ladungsverkehr, wobei die Ladeeinheiten mit zwei Halbportalkranen gehoben und/oder in Kombination mit Querförderbändern transportiert und zwischengelagert bzw. umgeschlagen werden. Auch bei dieser Lösung werden die prinzipiellen Nachteile der Containerkrane beim Güterumschlag, wie hohe Investitions- u. Betriebskosten, großer Platzbedarf, lange Durchlaufzeiten und Behinderung durch den elektrischen Fahrdraht nicht beseitigt.

In der WO 96/17797 wird ein Verfahren und die zugehörigen Einrichtungen beschrieben, um Ladeeinheiten vom einem Lastkraftwagen auf Eisenbahnwaggons bzw. umgekehrt umzuladen, aber auch von Waggons eines Zuges auf einem Gleis auf die Waggons auf einem anderen Gleis transferieren zu können. Als Hebevorrichtung wird ein ortsfester oder auf Schienen fahrbarer, drehbarer Umladekran mit horizontalem, teleskopartig ausfahrbarem Ausleger, der unter dem elektrischen Fahrdraht operiert, verwendet. Der große Nachteil dieser Hebevorrichtung ist, dass immer nur eine Ladeeinheit nach der anderen umgeladen werden kann und jeder Umladevorgang relativ lange dauert insbesondere dann, wenn sich der Drehkran in Längsrichtung, also parallel zum Zug, bewegen muss. Die Aufenthaltsdauer des Zuges in den einzelnen Bahnhöfen ist von der Anzahl der auf- bzw. abzuladenden Ladeeinheiten abhängig und variiert ständig von Bahnhof zu Bahnhof bzw. am selben Bahnhof von Tag zu Tag. Eine fixe Aufenthaltsdauer in jedem Bahnhof analog zu den Personenzügen, die so lange sein müsste, dass mit Sicherheit auch einmal eine größere Anzahl von Ladeeinheiten pro Bahnhof umgeladen werden könnte, würde daher die gesamte Fahrzeit in einem Ausmaß verlängern, das die Konkurrenzfähigkeit des Bahntransportes nicht verbessert sondern eher verschlechtert. Eine Abfahrt entsprechend der jeweiligen Dauer für das Umladen der Ladeeinheiten ist für einen derartigen Kombi-Zug fahrplantechnisch nicht möglich

Laut der DE 195 26 296 A1 ist vorgesehen, jeden Güterzug mit einem zusammenlegbaren Portalkran auf einem speziellen Transportwagen zu versehen. Abgesehen von der nicht gelösten Problematik der Oberleitung hat dieser Vorschlag den großen Nachteil, dass die Kranreichweite unabhängig von der Position des Portalkrans im Zug, beispielsweise am Zugende, in der Mitte oder nach der Lok, nie ausreichen kann, um jede Ladeeinheit am Zug abladen bzw. freie Ladeflächen beladen zu können.

Einen anderen Vorschlag, das Umladen vom Lastkraftwagen (LKW) auf die Eisenbahnwaggons und umgekehrt zu vereinfachen, stellt die sogenannte "Rollende Landstrasse" dar. Dabei werden die kompletten LKW auf Spezialwaggons gefahren. Damit entfällt zwar das Umladen der Waren bzw. Ladeeinheiten sowohl am Ausgangsbahnhof als auch am Zielbahnhof. Für die Spediteure bringt diese Methode jedoch kaum Einsparungen, weil der LKW, meistens auch der Fahrer während des Bahntransportes nicht anderwärtig eingesetzt werden können. Da die LKW in einer Richtung den Zug der Länge nach befahren, wie ja bekannt muss der erste LKW über alle Waggons fahren, ist ein Abfahren von Zug nur im Zielbahnhof möglich. Diese Methode löst die Unattraktivität des Bahntransportes am wenigsten - entsprechend sind die Auslastungszahlen.

Bekannt sind auch die Vorschläge, Krane bzw. andere Hebevorrichtungen am LKW anzubringen, um die Ladeeinheiten vom Waggon auf den LKW bzw. umgekehrt zu transferieren. Zum Beispiel wird in der DE 43 24 195 A1 die Ladeeinheit mittels einer am LKW angeordneten Hebevorrichtung angehoben und vom Waggon bzw. vom LKW auf den Waggon transferiert. Die Nachteile der in der erwähnten Druckschrift bzw. in weiteren ähnlichen Druckschriften beschriebenen Methode, sind, neben den bekannten Problemen mit der elektrischen Oberleitung, vor allem der Nachrüstzwang für die bereits existierenden LKW mit derartigen Hubelementen. Außerdem ist das Zwischenlagern der Ladeelemente auf kleineren Bahnhöfen zwischen dem Ausgangs- und Endbahnhof problematisch, weil jeder dieser Bahnhöfe einen eigenen, kaum ausgelasteten LKW mit einer derartigen Hubvorrichtung bräuchte. Ohne diesen LKW könnten die von den Frächtern selbst abgeladenen Ladeelemente nicht mehr manipuliert oder dann auf die Waggons aufgeladen werden.

Bekannt sind auch die Vorschläge über selbstfahrende Hebeeinrichtungen bzw. Verladevorrichtungen für Ladeeinheiten, ähnlich den Gabelstaplern. Sowohl in der DE 28 24 851 C2 als auch in der DE 35 42 190 A1 werden derartigen straßentaugliche Verladevorrichtungen beschrieben. Diese Verladevorrichtungen lösen zwar einige der Probleme zur Steigerung der Attraktivität des Bahntransportes, wie geringe Investitionskosten und auch auf kleinen Bahnhöfen einsetzbar. Die größten Nachteile, wie lange Durchlaufzeiten, weil die Ladeeinheiten auch nur nacheinander umgeladen werden können und somit keine spürbare Verbilligung des Bahntransportes und Unverträglichkeit mit der Oberleitung bringen, bleiben jedoch bestehen.

Auch die in der DE 42 24 829 C2 beschriebene Vorrichtung ist eine selbstfahrende Verladevorrichtungen für Ladeeinheiten mit den oben beschriebenen Nachteilen dieser selbstfahrenden Verladevorrichtungen. Zusätzlich hat diese Verladevorrichtungen noch den schwerwiegenden Nachteil, dass sie einzelne Ladeeinheiten nur dann vom beladenen Eisenbahnwaggon abladen oder zuladen kann, wenn genügend Platz zum auffahren auf den Waggon vorhanden ist. Die Verladevorrichtung fährt nämlich entlang der Längsachse der Ladeeinheit über diese und hebt sie auf. Ist zwischen den auf den Waggons abgeladenen Containern zu wenig Platz, was normalerweise zutrifft, muß die Verladevorrichtungen vom Zugende auffahren und die auf- oder abzuladenden Ladeeinheiten über einen Teil der schon aufgeladenen Ladeeinheiten überheben. Bei einer Oberleitung geht das sowieso nicht und wie das Fahren über die Waggonzwischenräume mit den Puffern usw. funktionieren soll, ist nicht ersichtlich.

Bekannt sind auch Hubvorrichtungen im Waggonboden mit denen die Ladeeinheiten soweit gehoben werden können, dass geeignete Hebevorrichtungen, wie etwa gabelstaplerähnliche, aber wesentlich massivere Containerstapler unter die Ladeeinheit geschoben werden können und dadurch die Ladeeinheit von unten aufheben. Durch das Aufheben von unten wird das Problem mit der starkstromführenden Oberleitung umgangen. Als Beispiel für die diversen Ausführungsvorschläge von Hubvorrichtungen im Waggonboden kann die DE 43 32 266 C2 herangezogen werden. Den unbestrittenen Vorteilen dieses Konzeptes steht leider der gravierende Nachteil gegenüber, dass alle bis heute gebauten Güterwaggons ungeeignet sind und entweder verschrottet oder umgebaut werden müssen - wenn ein entsprechender Umbau überhaupt möglich ist.

Die DE 40 14 598 C3 beschreibt ein Verfahren und eine entsprechende Hubvorrichtung am Waggon wodurch das Umladen von Wechseleinheiten, insbesondere von Wechselbehältern mit höhenverstellbaren Stützfüßen, vom Waggon auf LKW bzw. umgekehrt wesentlich vereinfacht werden soll. Für den universellen Einsatz im kombinierten Verkehr Straße/Schiene ist dieses Verfahren jedoch ungeeignet, weil andere Ladeeinheiten wie beispielsweise Container nicht umgeladen werden können.

In der DE 44 29 710 A1 wird ein Verfahren und eine Vorrichtung zum Umladen von Ladeeinheiten zwischen Schiene - Schiene, Schiene - Straße oder Schiene - Schiff beschrieben. Dabei erfolgt das Umladen durch Querverschieben, also im rechten Winkel zur Fahrzeuglängsachse. Die Ladeeinheiten stehen auf sogenannten Wechselböden, die als ganzes oder Teile davon seitlich von einem Transportfahrzeug herunter und auf das andere aufgeschoben werden kann. Abgesehen davon, dass unklar bleibt wie die Niveauunterschiede ausgeglichen werden, müssen die Waggons und LKW, die am Umladen von Ladeeinheiten beteiligt sind, exakt zueinander positioniert sein, da nur ein Querverschieben möglich ist. Der große Nachteil dieses Verfahrens ist jedoch, dass keine vernünftige Zwischenlagerung der Ladeeinheiten möglich ist. Ein Eisenbahnwaggon oder LKW dessen Wechselboden mit einer Ladeeinheit irgendwo zwischengelagert wird, kann ohne neuen Wechselboden nicht erneut beladen werden.

Bekannt sind auch zahlreiche Vorschläge zum Umladen von Ladeeinheiten von der Schiene auf die Straße und umgekehrt durch Verwendung von sogenannten Auflageplatten oder Transportplattformen ähnlich von Paletten. Dabei werden die Ladeeinheiten durch unterschiedliche aber bekannte Hebevorrichtung angehoben, die Auflageplatten oder Transportplattformen unter die Ladeeinheiten positioniert und durch Absenken auf diesen abgestellt. Die Ladeeinheiten auf den Auflageplatten oder Transportplattformen können nun seitlich d. h. im rechten Winkel zur Fahrzeuglängsachse verschoben und damit vom Transportfahrzeug geschoben werden. Da die Ladeeinheiten, wie zum Beispiel 20 Fuß - Container, beladen mehrere Tonnen wiegen können, werden zur leichteren seitlichen Verschiebung Rollen, Räder auf Schienen und dgl. vorgesehen. Die Auflageplatten oder Transportplattformen sind entweder so ausgestaltet, dass sie auch den Quertransport der Ladeeinheiten zum anderen Transportfahrzeug, sei es LKW oder Waggon, durchführen können, wie beispielsweise in der DE 43 01 019 C2 oder in der DE 198 04 491 A1 beschrieben. Oder es sind zusätzliche Vorrichtungen vorgesehen, die die Auflageplatten oder Transportplattformen aufnehmen. Die zusätzlichen Transportvorrichtungen ermöglichen dann auch ein Verschieben in Längsrichtung, also parallel zum Zug wie in der DE 197 33 963 C2 beschrieben. Zusätzlich sind auch weitere Hubvorrichtungen vorgesehen, um eventuelle Niveauunterschiede zwischen Bahn und Straße auszugleichen. Auch Vorrichtungen zum selbsttätigen Ziehen/Schieben sind vorgesehen. Der Abladevorgang erfolgt in umgekehrter Reihenfolge.

Alle Vorschläge die keine Bewegung der Ladeeinheiten parallel zum Zug vorsehen, sind nicht besonders für das schnelle Umladen zwischen Schiene und Straße geeignet. Der gravierende Nachteil dieser Verfahren ist, dass die am Umladen beteiligten Transportfahrzeuge exakt zueinander positioniert werden müssen, was insbesondere bei einem Güterzug zeitaufwändig ist. Sind mehrere Ladeeinheiten umzuladen, kann das nur nacheinander erfolgen und ist sehr zeitaufwändig. Sind beispielsweise zwei Container für einen LKW vorgesehen und ein Container ist am Anfang des Zuges, der andere befindet sich aber am Zugende muss der Güterzug während des Umladens anfahren und erneut positioniert werden. Außerdem geht bei diesen Verfahren nicht genau hervor, wie das Zwischenlagern der Ladeeinheiten ablaufen soll.

Bei den Vorschlägen mit zusätzlichen, in Längsrichtung verfahrbaren Transportvorrichtungen auf denen die Auflageplatten oder Transportplattformen inklusive der Ladeeinheit platziert sind, ist der entscheidende Nachteil, dass die Umladevorgänge nur zeitlich nacheinander möglich sind. Bei mehreren Ladeeinheiten, die umgeladen oder zwischengelagert werden sollen, dauert der Aufenthalt des Zuges im Bahnhof entsprechend länger und es entstehen die Probleme mit der Fahrplaneinhaltung seitens der Bahn. Eine Abfahrt entsprechend der jeweiligen Dauer für das Umladen der Ladeeinheiten ist fahrplantechnisch nicht möglich, weil es zu Kollisionen mit den verschiedenen Zügen, die nach einem Fahrplan fahren, kommt.

Werden aber zum schnelleren Umladen mehrere Ladeeinheiten, zwei oder noch mehr, Transportvorrichtungen eingesetzt, kommt es zwangsläufig zur gegenseitigen Blockierung der einzelnen Transportvorrichtungen, die sich nicht ausweichen können.

Bekannt sind auch besonders konstruierte Waggonböden bzw. Ladeflächen von LKW. In der US 4 208 160 A zum Beispiel ist der Waggonboden aber auch die Ladefläche des LKW mit Vertiefungen quer zur Fahrtrichtung versehen in denen sich, ähnlich einer Schwalbenschwanzführung bei Drehbänken, eine Umladevorrichtung hin und her bewegen kann. Auf dieser Umladevorrichtung, die entweder am LKW oder am Eisenbahnwaggon positioniert wird, steht die Ladeeinheit und kann durch entsprechende, selbsttätige Zieh- oder Schiebevorrichtungen umgeladen werden. Diese Methode hat aber zwei gravierende Nachteile. Es entsteht ein Nachrüstzwang für die bereits existierenden LKW aber auch für die Eisenbahnwaggons mit derartig ausgeführten Vertiefungen. Ob die bestehenden Eisenbahnwaggons überhaupt wirtschaftlich umzubauen sind, ist mehr als fraglich. Weiters muss die Positionierung des LKW zum Waggon auf Millimeter genau sein, damit die Umladevorrichtung eines Transportfahrzeuges problemlos in die "Führung" des anderen Transportfahrzeuges passt. Außerdem ist es nicht ersichtlich wie eventuell vorhandene Niveauunterschiede zwischen den beiden Transportfahrzeugen ausgeglichen werden können.

Aufgabe der Erfindung ist es, ein Verfahren zum Um- bzw. Verladen von mindestens einer Ladeeinheit der eingangs genannten Art zu schaffen, das einerseits die obigen Nachteile vermeidet und das anderseits ein wirtschaftliches, also effizientes und kostengünstiges Umladen von Ladeeinheiten ermöglicht, damit sich der Gütertransport auf der Schiene zu einer attraktiven Alternative zum Straßentransport entwickeln kann.
Die Aufgabe wird durch das Verfahren gemäß Anspruch 1 gelöst.

Das erfindungsgemäße Verfahren umfasst nachstehende Schritte
- spätestens im Stillstand des Zuges bzw. Fahrzeuges in seiner Verladeposition über ein Erkennungssystem die Position der Ladeeinheiten und der freien Ladeflächen erfasst wird,
- über das Erkennungssystem mindestens eine, vorzugsweise eine selbstfahrende, Verladehilfseinrichtung im Bereich der zu verladenden Ladeeinheit positioniert wird,
- über ein Erkennungsorgan die Lastaufnahmefläche der Ladeeinheit zur Verladung erfasst wird,
- eine formschlüssige Verbindung zwischen einer Hebe- und Senkeinrichtung mit einer, vorzugsweise ladeflächennahen, Lastaufnahmefläche der Ladeeinheit hergestellt wird,
- die Hebe- und Senkeinrichtung die Ladeeinheit in z-Richtung anhebt,
- mindestens ein Ausleger in x-Richtung einer Verschiebe-Einheit aus der Bereitschaftsstellung unter die Ladeeinheit ausgefahren wird,
- die Hebe- und Senkeinrichtung die Ladeeinheit in z-Richtung auf den Ausleger absenkt,
- die Ladeeinheit in x-Richtung über die Verschiebe-Einheit in die neue Position bewegt wird,
- der Ausleger in seine Bereitschaftsstellung eingefahren wird.

Mit der Erfindung ist es erstmals möglich, Ladeeinheiten durch die enorme Verkürzung des Umladevorganges infolge eines möglichen, vollautomatischen Betriebes, das heißt ohne Personal, kostengünstig umzuladen, so dass ein Warentransport auch über Bahnhöfe zwischen dem Ausgangs- und Zielbahnhof des Zuges, unter dem elektrischen Fahrdraht und ohne rangieren von Waggons, wirtschaftlich wird. Damit wird der Transport auf der Schiene konkurrenzfähig und zu einer wirtschaftlichen und volkswirtschaftlich notwendigen Alternative zum Transport auf der Straße. Ein weiterer großer Vorteil ist die Möglichkeit, durch den Einsatz von Erkennungssystemen und einer zentralen Datenverarbeitungsanlage sämtliche Um- und Verladeaktivitäten zu erfassen, in Echtzeit darzustellen und zu dokumentieren. Damit ist es erstmals möglich, nicht auffindbare Ladeeinheiten jederzeit und von jedem Bahnhof in kürzester Zeit aufzuspüren und die Ursachen für das "Verschwinden" zu rekonstruieren.

Nach einer besonderen Ausführungsform der Erfindung werden mehrere Umladevorgänge an einem Zug bzw. Fahrzeug zeitgleich und/oder parallel durchgeführt. Durch den Einsatz computergesteuerter Verladehilfseinrichtungen für das Anheben der Ladeeinheiten in z - Richtung, die von der Transportlogistik rechtzeitig bei den umzuladenden Ladeeinheiten positioniert wird und anschließendem transferieren auf die Verschiebe-Einrichtungen, ergibt sich der enorme Vorteil, dass mehrere Ladeeinheiten zeitgleich und/oder parallel angehoben und umgeladen werden können. Das heißt die Anzahl der Um- und Verladevorgänge pro Zeiteinheit wird signifikant gesteigert.

Gemäß einer weiteren besonderen Ausführungsform der Erfindung werden zum Sortieren der Ladeeinheiten diese in y-Richtung mit Sortierfahrzeugen verfahren. Neben dem Umladen von einem Transportfahrzeug zum anderen ist sowohl ein Zwischenlagern als auch ein Sortieren der Ladeeinheiten auf einem Zug oder Zwischenzügen möglich. Die Ladeeinheiten werden vom LKW oder Waggon auf Sortiervorrichtungen transferiert, die in Richtung der Zuglängsachse bewegbar sind. Durch die Computersteuerung werden Kollisionen mit anderen Sortiervorrichtungen vermieden, indem eine der Sortiervorrichtungen solange zurückfährt bis sie nicht mehr im Weg ist.

Nach einer weiteren Ausführungsform der Erfindung werden die Verladebewegungen unter dem stromführenden Fahrdraht mit einem Sicherheitsabstand zur Vermeidung von Überschlägen durchgeführt. Es kann also problemlos unter dem Hochspannung führendem Fahrdraht umgeladen bzw. zwischengelagert und danach wieder auf Waggon oder LKW aufgeladen werden. Die Ladeeinheit wird von unten nur soviel angehoben, dass die Ausleger einer Verschiebe-Einrichtung aus der Bereitschaftsstellung unter die Ladeeinheit ausgefahren werden kann und dann wird die Ladeeinheit bereits wieder abgesenkt und seitlich verschoben. Da die Hubhöhe begrenzt ist, kann eine Berührung des Hochspannung führendem Fahrdrahtes ausgeschlossen werden.

Gemäß einer besonderen Ausgestaltung der Erfindung werden die einzelnen aneinander gefügten Verfahrensschritte zum Um- bzw. Verladen von mindestens einer Ladeeinheit automatisiert, insbesondere ohne Bedienungspersonal, durchgeführt. Der gesamte Ablauf des Um- bzw. Verladevorgangs ist automatisiert bzw. computergesteuert. In der Ablaufsteuerung sind laufend Sicherheitskontrollen vorgesehen, wie beispielsweise ob die Ladeeinheit ordnungsgemäß angehoben oder sicher auf der Sortiervorrichtungen platziert ist, so dass alle Ladevorgänge ohne Bedienungs- oder Kontrollpersonal erfolgen können. Daraus resultiert der enorme Vorteil, dass sehr viel Personal eingespart und einer der größten Kostenfaktoren beim Bahntransport entsprechend reduziert werden kann. Außerdem wird nicht nur die Einsatzbereitschaft des gesamten Systems erhöht, durch Sonn- und Feiertagsarbeit, sondern vor allem die Zuverlässlichkeit gesteigert, weil menschliches Versagen ausgeschlossen ist.

Nach einer Weiterbildung der Erfindung werden vor dem Stillstand des Zuges bzw. Fahrzeuges in seiner Verladeposition über ein Erkennungssystem die Waggons bzw. Anhänger, die Waggonfolge und die Ladeeinheiten identifiziert und erfasst. Es ist somit erstmals möglich, eine automatische Überprüfung der Ladung vornehmen zu lassen, das heißt, es kann kontrolliert werden, ob noch alle Ladeeinheiten unbeschädigt vom Terminal übernommen wurden und am Zug sind und ob die Reihenfolge stimmt. Damit entfallen langwierige Suchaktionen nach irrtümlich abgehängten Waggons oder während der Fahrt verlorene Ladeeinheiten.

Gemäß einer weiteren Ausgestaltung der Erfindung wird im Stillstand des Zuges bzw. Fahrzeuges in seiner Verladeposition die genaue Position des Zuges und/oder die Position der Waggons bzw. Anhänger bzw. deren Achsen erfasst. Damit wird es erstmals möglich, computergesteuert sowohl die Verladehilfseinrichtungen als auch die Verschiebe-Einrichtungen und gegebenenfalls Sortierfahrzeuge noch vor dem Stillstand des Zuges zu den umzuladenden Ladeeinheiten zu positionieren, so dass mit der Um- und Verladung sofort nach dem Stillstand des Zuges begonnen werden kann. Zusammen mit der Möglichkeit mehrere Ladeeinheiten zur gleichen Zeit umzuladen wird es erstmals möglich, die Anzahl der umzuladenden Ladeeinheiten von der Aufenthaltsdauer des Zugs im Bahnhof zu entkoppeln und enorm zu verbilligen.

Nach einer besonderen Weiterbildung der Erfindung wird spätestens im Stillstand des Zuges bzw. des Fahrzeuges in seiner Verladeposition der Zustand der Ladeeinheiten für das Abladen, insbesondere die Art der Lastaufnahmefläche, erfasst. Dadurch ist es möglich noch vor dem Stillstand des Zuges die Ausbildung der Lastaufnahmevorrichtung an den Ladeeinheiten zu erfassen, wie Ladekante, Öse oder Bolzen, und die dazu passenden computergesteuerten Hubelemente zu positionieren. Außerdem können die Sicherungszapfen bzw. der Zustand der Ladeflächen erfasst werden, auf der noch keine Ladeeinheiten abgestellt sind. Es könnte ja dort beispielsweise ein I - Träger vergessen worden sein, der eine darauf abgelegte Ladeeinheit beschädigen würde.

Gemäß einer Ausgestaltung wird über ein Erkennungsorgan der Zustand der Unterflächen der Ladeeinheit und/oder der Ladefläche und/oder der Sicherungszapfen erfasst und verifiziert. Diese besonderen Ausgestaltungen der Erfindung ist eine Voraussetzung für das einwandfreie Funktionieren der gesamten Anlage und des Um- bzw. Verladevorgangs. Sie ist eine der Funktionsgarantien der Erfindung und für die Sicherheit notwendig. Ist zum Beispiel der Sicherungszapfen so beschädigt oder ist im Winter so vereist, dass er seine Funktion nicht erfüllen kann, ist ein Abrutschen der Ladeeinheit während des Um- bzw. Verladevorgangs oder während des Transportes am Transportfahrzeuges bis zum unkontrollierten zu Boden stürzen nicht ausgeschlossen. Daraus können enorme Schäden an der Ladeeinheit mit den Waren resultieren. Werden jedoch vom Erkennungsorgan Abweichungen vom Sollzustand erfasst, können rechtzeitig Gegenmaßnahmen eingeleitet werden.

Gemäß einer weiteren Ausführungsform der Erfindung werden am ausfahrenden Zug bzw. Fahrzeug über ein Erkennungssystem die Waggons bzw. Anhänger, die Waggonfolge und die Ladeeinheiten identifiziert und erfasst. Dadurch wird es erstmals möglich die tatsächliche Position der Waggons bzw. der Ladeeinheiten im Zug, insbesondere die neue hinzugekommenen, an das nächste Umladeterminal weiterzugeben. Nur mit diesen Informationen können die computergesteuerte Verladehilfseinrichtungen und die Verschiebe-Einrichtungen am Folgeterminal rechtzeitig und richtig positioniert werden. Vor allem für die Kontrolle der Umladetätigkeit sind diese Daten wichtig. So kann zum Beispiel kontrolliert werden, ob alle für den Bahnhof bestimmten Ladeeinheiten, den der Zug gerade verlässt, auch tatsächlich abgeladen, bzw. ob die richtigen neu aufgeladen wurden. Ferner können mit diesen Daten optimierende Umladevorgänge in Folgeterminals geplant werden.

Nach einer weiteren Ausführungsform der Erfindung werden die über das Erkennungssystem erfassten Daten an eine Datenverarbeitungsanlage, vorzugsweise an eine zentrale Datenverarbeitungsanlage, weitergegeben, in der die Logistik erstellt und gegebenenfalls die entsprechenden Daten an weitere Terminals entlang der Transportkette weitergegeben bzw. übertragen werden. Damit ist es erstmals möglich alle Daten über die Waggons und über jede einzelne Ladeeinheit am Zug, zentral zu speichern und laufend zu aktualisieren. Daraus resultiert ein weiterer großer Vorteil, dass eine umfassende Transportlogistik mit lückenloser Kontrolle erstellt wird und der Ablauf der Umladevorgänge in Echtzeit darstellt werden kann. Damit ergibt sich, dass erstmals nicht auffindbare Ladeeinheiten jederzeit und von jedem Bahnhof in kürzester Zeit auffindbar sind und die Ursachen für das "Verschwinden" schnell rekonstruiert werden können.

Gemäß einer Weiterentwicklung der Erfindung erfolgt über die Logistik die Positionierung der Verladehilfseinrichtungen. Diese Weiterentwicklung bringt den Vorteil, dass die Logistik ermitteln kann, welche Ladeeinheiten im nächsten Bahnhof um- oder verladen werden, welche Lastaufnahmevorrichtung an den Ladeeinheiten vorhanden sind, wie beispielsweise Ladekante, Öse oder Bolzen, und welche Position diese Ladeeinheiten auf den Transportfahrzeugen haben bzw. wo sie zwischengelagert sind. Auf Grund dieser Informationen wird veranlasst, dass die richtigen Verladehilfseinrichtungen, mit den passenden Hebe- und Senkvorrichtungen für das Bewegen der Ladeeinheiten in z - Richtung, noch vor dem Stillstand des Zuges bzw. des Transportfahrzeuges an der richtigen Stelle, insbesondere in y - Richtung, und vor allem in der benötigten Anzahl positioniert werden können. Damit ist sichergestellt, dass nach dem Stillstand des Transportfahrzeuges sofort mit dem zeitgleichen und/oder parallelem Um- bzw. Verladen begonnen werden kann.

Die Aufgabe der Erfindung wird ferner über ein Umladesystem gemäß Anspruch 13 gelöst.

Das erfindungsgemäße Umladesystem zur Durchführung des Verfahrens umfasst:
- ein Erkennungssystem zur Erfassung der Position der Ladeeinheiten und der freien Flächen vorgesehen ist,
- mindestens eine, vorzugsweise selbstfahrende, Verladehilfseinrichtung vorgesehen ist, die auf einem parallel zum Verladegleis angeordneten Hilfstransportweg, insbesondere auf einem Hilfstransportgleis, verfahrbar ist,
- die Verladehilfseinrichtung mindestens ein Erkennungsorgan für die Erfassung der Lastaufnahmefläche der Ladeeinheit zur Verladung und eine Hebe- und Senkeinrichtung für die Bewegung der Ladeeinheit in z-Richtung aufweist,
- mindestens eine, gegebenenfalls auf einem weiteren Hilfstransportweg verfahrbare, Verschiebe-Einheit mit mindestens einem Ausleger vorgesehen ist.

Mit der Erfindung ist es erstmals möglich den Transport von Gütern auf der Schiene so zu verbilligen, dass der Bahntransport konkurrenzfähig wird. Die entscheidende Kostensenkung wird bei Um- bzw. Verladen der Ladeeinheiten vom Waggon auf den LKW und umgekehrt sowie durch den Entfall von den Zug bildenden Zusatzarbeiten erreicht. Nicht nur, dass die Anzahl der umzuladenden Ladeeinheiten durch ein zeitgleiches und/oder paralleles Um- bzw. Verladen erfolgt und damit sehr viele Ladeeinheiten pro Zeiteinheit um- bzw. verladen werden können, erfolgt der gesamte Um- bzw. Verladevorgang vollautomatisch, das heißt ohne Bedienungs- und Kontrollpersonal. Zusätzlich zum Vorteil der enormen Verbilligung ermöglicht die Vereinfachung des gesamten Um- bzw. Verladevorgang ein wirtschaftliches Um- bzw. Verladen auf allen Bahnhöfen zwischen dem Ausgangs- und Zielbahnhof, was derzeit hauptsächlich aus fahrplantechnischen Gründen unmöglich ist. Durch Erkennungssysteme und eine zentrale Datenverarbeitung sind alle Vorgänge lückenlos und in Echtzeit erfasst und dokumentiert, so dass z. B. Recherchen nach "verschollenen" Ladeeinheiten in kürzester Zeit und problemlos erledigt werden können.

Gemäß einer weiteren Ausgestaltung der Erfindung ist das Erkennungssystem ein Videosystem mit selektiver OCR Erkennung und Dokumentation. Das hat den Vorteil, dass damit erstmals die Erfassung der Position der einzelnen Ladeeinheiten mit einem dem Stand der Technik entsprechendem und zig - fach angewendetem und bewährtem Verfahren durchgeführt werden kann.

Entsprechend einer weiteren Ausführungsform der Erfindung ist das Erkennungssystem auf Basis der RFID (Radio Frequency Identification) - Technologie aufgebaut. Das hat den Vorteil, dass ein zweits, redundantes Erkennungssystem eingesetzt werden kann, das unabhängig von Wetter- und/oder Sichtverhältnissen, wie Schnee oder bei Nacht, funktioniert.

Gemäß einer Weiterentwicklung der Erfindung hat die Verladehilfseinrichtung mindestens ein Erkennungsorgan in Form einer optischen, bewegungsfähigen Messeinheit, gegebenenfalls ein Multifocus-Objektiv , das an einem Lastaufnahmepunkt der Ladeeinheit die Parameter, wie beispielsweise die Position der Greifkanten und/oder der Aufsetzzapfen und/oder die Flächenbeschaffenheit von Ladeeinheit, Ladefläche und/oder Lastungleichgewichte bzw. witterungsbedingte Störungen erfasst. Dieses Merkmal ist die Voraussetzung für den entscheidenden Vorteil der Erfindung, den Um- bzw. Verladevorgang vollautomatisch, das heißt ohne Bedienungspersonal durchführen zu können. Nur wenn das System die Position und den Zustand der Greifkanten und/oder der Aufsetzzapfen und/oder die Flächenbeschaffenheit von Ladeeinheit, Ladefläche und/oder Lastungleichgewichte bzw. witterungsbedingte Störungen einwandfrei erfassen und Positionskorrekturen der Verladehilfseinrichtung auslösen und steuern kann, ist ein zufrieden stellendes Funktionieren und Einhalten der erforderlichen Sicherheitsstandards gewährleistet.

Nach einer weiteren Ausführungsform der Erfindung weist die Verladehilfseinrichtung, mindestens eine Hebe- und Senkeinrichtung auf, die aus einem lasttragenden Kragarm besteht. Das hat den Vorteil, dass durch den ausfahrbaren Kragarm die Verladehilfseinrichtung sehr nahe am Transportfahrzeug und damit an der Ladeeinheit positioniert werden kann. Je kleiner der Abstand Verladehilfseinrichtung zur Ladeeinheit bzw. zur Lastaufnahmevorrichtung an den Ladeeinheiten, wie Ladekante, Öse oder Bolzen, ist, um so geringer wird das Lastaufnahmemoment, das beim Anheben der zum Teil tonnenschweren Ladeeinheiten entsteht und das von der Verladehilfseinrichtung aufgenommen und übertragen werden muss. Durch den geringen Abstand ist auch das Moment wesentlich kleiner und die Verladehilfseinrichtung braucht nicht so massiv ausgeführt werden, was die Herstellkosten bzw. in weiterer Folge die erforderlichen Investitionskosten niedrig hält.

Nach einer weiteren Ausführungsform der Erfindung weist die Verladehilfseinrichtung mindestens ein Gegenlager für die Abstützung des Auslegers einer korrespondierenden Verschiebe-Einrichtung auf. Dieses Merkmal der Erfindung bringt einen weiteren großen Vorteil. Mit dem Ausfahren des/der Auslegers an der Verschiebe-Einrichtung unter der Ladeeinheit hindurch in das gegenüber liegende Gegenlager einer Verladehilfseinrichtung, wird mit wenig konstruktiven Aufwand für die Stabilität der Verschiebe-Einrichtung unter der Last, ein sicheres und fehlerfunktionsfreies Verschieben der Ladeeinheiten gewährleistet. Zusätzlich können die Verschiebe-Einrichtungen wesentlich schlanker, das heißt gewichtssparender ausgeführt werden, was die Herstellkosten bzw. in weiterer Folge die erforderlichen Investitionskosten weiter senkt.

Entsprechend einer weiteren Ausführungsform der Erfindung sind die Verladehilfseinrichtungen beidseitig, parallel zum Verladegleis mit ihren Hilfstransportwegen vorgesehen und zum Um- bzw. Verladen einer Ladeeinheit zwei, vorzugsweise vier oder mehr, Verladehilfseinrichtungen im Bereich der zu verladenden Ladeeinheit positioniert. Durch die gleichmäßige Verteilung der Last auf mindestens zwei, vorzugsweise vier Verladehilfseinrichtungen können sowohl die Verladehilfseinrichtungen als auch die Verschiebe-Einrichtungen wesentlich schlanker, das heißt gewichtssparender ausgeführt werden. Dieses Merkmal bringt einen weiteren großen Vorteil. Werden die Ladeeinheiten durch zwei, vorzugsweise vier Verladehilfseinrichtungen angehoben, können Unregelmäßigkeiten beim Anheben der Last, wie z. B. ungleichmäßige Beladung, Defekt in einer Hebe- und Senkeinrichtung von der Verladehilfseinrichtung, Anfrieren der Ladeeinheit auf der Ladefläche, nachgeben oder brechen beschädigter Lastaufnahmevorrichtungen usw., leicht erkannt und rechtzeitig Gegenmaßnahmen eingeleitet werden. Auf diese Weise wird die Unfallgefahr auf ein Minimum reduziert.

Gemäß einer weiteren Ausführungsform der Erfindung ist die Verschiebe-Einrichtung selbstfahrend oder mit einer Zugmaschine verfahrbar. Dadurch ergibt sich der Vorteil einer sehr großen Flexibilität hinsichtlich der Ausführung der Verschiebe-Einrichtungen. Bei weniger frequentierten Bahnhöfen oder wenn aus Platzgründen eine Zwischenlagerung der Ladeeinheiten auf einer räumlich vom Bahnhofsareal getrennten Fläche erfolgen muss, können die Verschiebe-Einrichtungen auch ohne Schienen von einer Zugmaschine wie z. B. einem Traktor verfahren werden.

Nach einer weiteren Ausgestaltung der Erfindung sind zum Sortieren der Ladeeinheiten in y-Richtung Sortierfahrzeuge vorgesehen. Dadurch können neben den Umladetätigkeiten auch Sortiervorgänge mit den Ladeeinheiten zeitgleich durchgeführt werden.

Gemäß einer Weiterbildung der Erfindung ist die Verschiebe-Einheit und das Sortierfahrzeug ein Kombinationsfahrzeug. Durch diese vorteilhafte Weiterbildung kann ein an Fahrzeugtypen reicher Fuhrpark vereinfacht werden.

Nach einer weiteren Ausführungsform der Erfindung ist eine Datenverarbeitungsanlage, insbesondere eine zentrale Datenverarbeitungsanlage, vorgesehen, die alle Daten der peripheren Einrichtungen, wie Erkennungssystem, Verladehilfseinrichtungen und Verschiebe-Einrichtungen, verarbeitet und die Logistik durchführt. Der Vorteil dieses Merkmals der Erfindung, die zentrale Datenverarbeitungsanlage mit der Verknüpfung aller Daten, liegt neben der Erstellung, Ausführung und Überwachung der gesamten Prozesslogistik vor allem in der Möglichkeit laufend sicherheitstechnische Abfragen vorzunehmen und bei Werten außerhalb der zulässigen Bandbreite steuernd einzugreifen. Nur wenn jeder Arbeitsschritt durch entsprechende Abfragen kontrolliert wird, ist die Sicherheit gegeben, dass bei Eintreten unvorhergesehener Ereignisse trotz Automatisierung und redundanten Sicherheiten, das heißt ohne Bedienungspersonal, keine Unfälle mit entsprechendem Schadenspotential passieren können.

Gemäß einer weiteren Ausführungsform der Erfindung ist über die Datenverarbeitungsanlage die Anzahl der Verladehilfseinrichtungen, deren Positionierung und die Kooperation mit der Verschiebe-Einheit steuerbar. Durch diese Ausgestaltung der Erfindung ergibt sich der große Vorteil, dass die Anzahl der umzuladenden Ladeeinheiten von der Aufenthaltszeit des Zuges im Bahnhof entkoppelt wird. Die Prozesslogistik gibt entsprechend der Anzahl der abzuladenden Ladeeinheiten die Anzahl von Verladehilfseinrichtungen und Verschiebe-Einrichtung vor. Auf Grund der vorhandenen Daten, sind die Position der abzuladenden Ladeeinheiten am Zug und die Art der Lastaufnahmevorrichtung an den Ladeeinheiten (Ladekante, Öse oder Bolzen) gegeben. Damit werden von der Logistik die richtige Anzahl von Verladehilfseinrichtungen mit der richtigen Lastaufnahmevorrichtung sowie die benötigte Anzahl von Verschiebe-Einrichtungen rechtzeitig positioniert. Sobald der Zug seine Halteposition erreicht hat, können alle Um- und Verladevorgänge koordiniert und gegebenenfalls gleichzeitig gestartet werden.

Nach einer Weiterentwicklung der Erfindung melden sich hinzu- oder hinwegkommende Verladehilfseinrichtungen selbsttätig über die Datenverarbeitungsanlage im Verbund an- bzw. ab. Durch diese Weiterentwicklung ergibt sich der Vorteil, dass die Um- bzw. Verladekapazität jedes Bahnhofs trotz gleich bleibender Aufenthaltsdauer des Zuges sehr flexibel ist. Jeder Bahnhof hat eine bestimmte Anzahl von Verladehilfseinrichtungen und Verschiebe-Einrichtungen, die je nach Bedarf abgerufen werden können. Daher ist es von großem Vorteil, wenn sich hinzu- oder hinwegkommende Verladehilfseinrichtungen selbsttätig über die Datenverarbeitungsanlage im Verbund an- bzw. abmelden. Außerdem könnten auch einmal eine Verladehilfseinrichtung und/oder eine Verschiebe-Einrichtung Fehlfunktionen haben. Durch das An- und Abmelden, bei dem jedes Mal alle Funktionen getestet werden und wegen der Redundanz des Systems bleibt das aber ohne Folgen. Diese Einrichtungen werden dann einfach nicht aufgerufen bzw. ausgeschieden.

Die Erfindung wird auch durch der Terminal gemäß Anspruch 26 gelöst.

Gemäß der Erfindung sind Terminals zwischen zwei Endbahnhöfen angeordnet, die eisenbahnsicherungstechnisch und logistisch einen Knoten bilden und mindestens ein weiteres Gleis, beispielsweise ein Service-Gleis und/oder ein Ausweichgleis, das, gegebenenfalls über fernsteuerbare Gleisweichen, mit einem Hauptgleis verbunden ist, aufweisen. Damit ist es erstmals möglich in fast allen bestehenden Bahnhöfen Um- bzw. Verladeeinrichtungen entsprechend den Merkmalen der Erfindung vorzusehen. Der enorme Vorteil dabei ist, dass für den Güterumschlag weder neue Bahnhöfe errichtet noch die Gleisanlagen bestehender Bahnhöfe komplett geändert werden müssen.

Entsprechend einer Weiterentwicklung der Erfindung sind die Service-Gleise und/oder Ausweichgleise im Terminal im Terminalbereich als Rillengleise und die Hilfstransportgleise als Rundschienen ausgeführt. Damit entsteht der Vorteil, dass die vorhandenen Transportwege mit beiden Transportmedien, für Bahn und Strasse, befahren werden können und die Um- bzw. Verladevorgänge flexibler und einfacher gestaltet werden können. Außerdem wird der vorhandene Platz besser genutzt.

Die Erfindung wird an Hand von Ausführungsbeispielen, die in den Zeichnungen dargestellt sind, näher erläutert.

Es zeigen:
Fig. 1 eine schematische Darstellung der Funktion des Auf- und Abladens einer Ladeeinheit,
Fig. 2 eine schematische Darstellung eines intermodalen Umschlags einer oder mehrerer Ladeeinheiten,
Fig. 3 eine schematische Darstellung der Sortierfunktion von Ladeeinheiten zwischen zwei Gleisen,
Fig. 4 die schematische Darstellung der Anordnung von optischen Messvorrichtungen,
Fig. 5a das Grundprinzip einer Verladehilfseinrichtung,
Fig. 5b die schematische Ansicht der Verladehilfseinrichtung gemäß Fig. 5a,
Fig. 6 das Grundprinzip einer mobilen Verschiebe-Einheit,
Fig. 7 die schematische Darstellung einer Schienen geführten Verschiebe-Einheit mit der Verladehilfseinrichtung im Schnitt,
Fig. 8 eine schematische Darstellung eines Umladesystems im Schnitt,
Fig. 9 einen Umschlagknoten auf einem Service-Gleis und
Fig. 10 einen Terminal auf einem Service-Gleis im Knoten.

Einführend sei festgehalten, dass in der beschriebenen Ausführungsform gleiche Teile bzw. Zustände mit gleichen Bezugszeichen bzw. gleichen Bauteilbezeichnungen versehen werden, wobei die in der gesamten Beschreibung enthaltenen Offenbarungen sinngemäß auf gleiche Teile bzw. Zustände mit gleichen Bezugszeichen bzw. gleichen Bauteilbezeichnungen übertragen werden können.

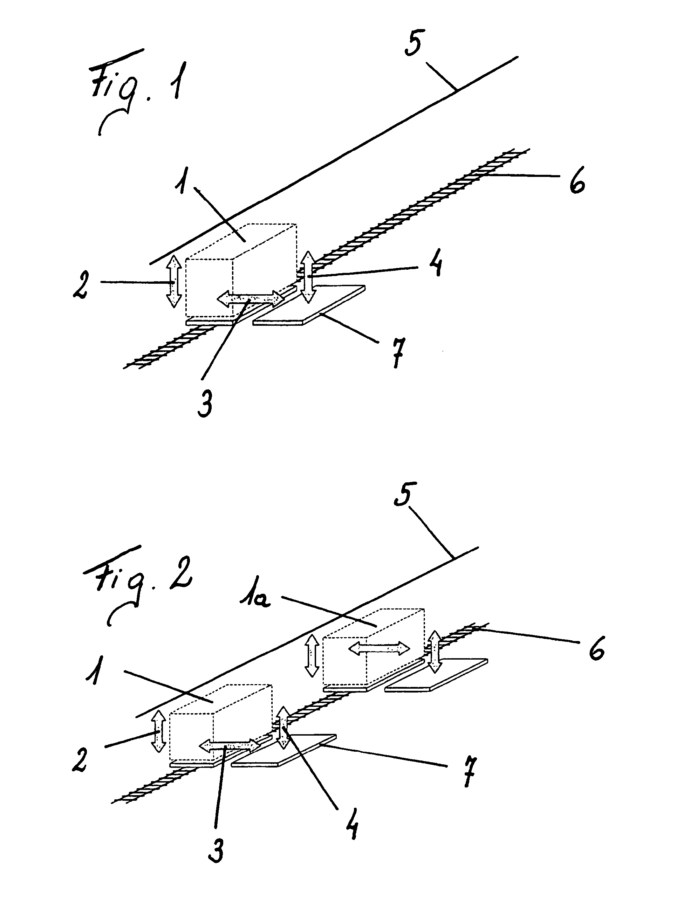

Gemäß der Fig. 1 werden, vorzugsweise standardisierte, Ladeeinheiten 1 im einfachsten Fall nur auf- und/oder abgeladen. Das intermodale Auf- und Abladen einer standardisierten Ladeeinheit 1 erfolgt zwischen einem Fahrzeug, wie Güterwagen - angedeutet durch das Gleis 6 -, LKW, oder einem innerbetrieblicher Transportwagen und einem anderen Fahrzeug oder einer fest installierten Einrichtung, beispielsweise einem Abstellplatz oder in einem Terminal auf eine Lagerbrücke oder einen Aufnahmerahmen 7. Das Auf- bzw. Abladen ist die Abfolge von einzelnen Bewegungen, wobei jede Bewegung in nur einer Richtung ausgeführt wird. Das Auf- bzw. Abladen einer Ladeeinheit 1 ist somit die Ausführung einer Abfolge von einer Lastbewegung in z-Richtung (Z-Lastbewegung angedeutet mit dem Pfeil 2), zum Verschieben eine Lastbewegung in x-Richtung (X-Lastbewegung angedeutet mit dem Pfeil 3) und zum Absetzen eine Lastbewegung in z-Richtung (Z-Lastbewegung angedeutet mit dem Pfeil 4).

Alle Bewegungsabläufe - sowohl der dazu notwendigen Einrichtungen, wie auch der Ladeeinheit 1 - erfolgen unter dem Fahrdraht 5 ohne in dessen Gefahrenbereich zu kommen. Es ist immer einen Sicherheitsabstand zur Vermeidung von Überschlägen gegeben.

Gemäß der Fig. 2 wird der intermodale Umschlag von Ladeeinheiten 1 erläutert. Unter dem Umschlag von intermodalen Ladeinheiten 1 wird zur Erreichung von schnellen Transportnetzen verstanden:

Das Auf- und Abladen gemäß der Fig. 1.
Die standardisierten Ladeeinheiten 1 sind vorzugsweise: ISO Container mit 20", 40" und 45" Länge, sowie Wechselbrücken der C-Klasse und mit 13,60 m Länge. Sie verfügen über normierte Öffnungen zum Einsetzen in die Aufnahmezapfen des Aufnahmerahmens 7 und über Lastaufnahmepunkte am Bodenrahmen.

Der Aufnahmerahmen 7 ist eine virtuelle Fläche, in der sich die Aufnahmezapfen an den zur Ladeeinheit 1 korrespondierenden Positionen befinden.
Das Umladen erfolgt mit einer horizontalen Verschiebebewegung (mittels X-Lastbewegung 3).
Das Verschieben erfolgt unter dem Strom führenden Fahrdraht 5.
Diese Operation kann an mehreren Ladeeinheiten 1, 1a parallel ausgeführt werden. Damit wird die Umschlagleistung skalierbar.
Die gesamte Operation wird ferngesteuert und ohne Bedienungspersonal durchgeführt.
Der intermodale Umschlag beginnt nach der Freigabe durch ein Terminalsteuerungssystem und endet mit der Feststellung des Abschlusses der Beladung.

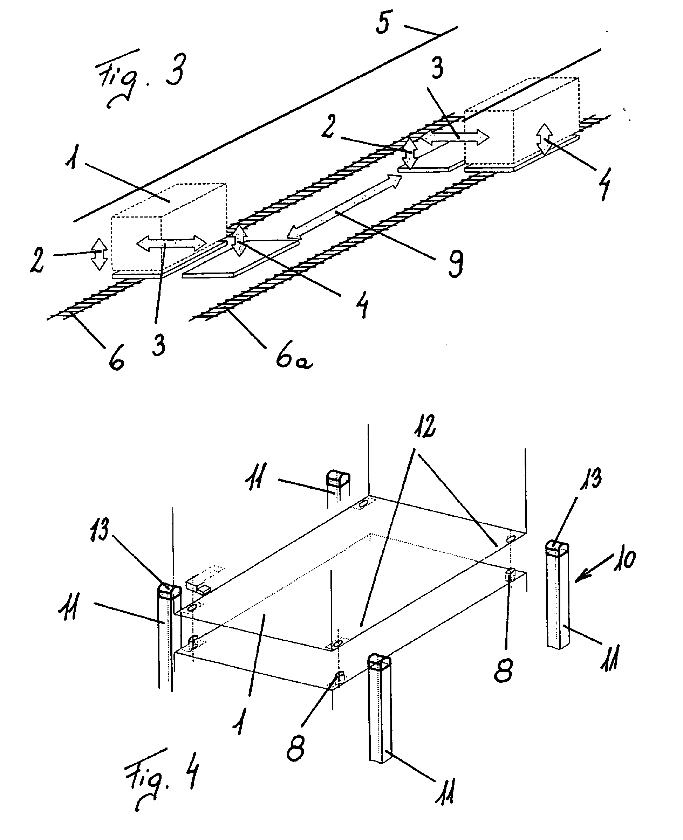

Gemäß der Fig. 3 wird das Sortieren von standardisierten Ladeeinheiten 1 beispielsweise zwischen zwei Schienenfahrzeugen aufgezeigt.
Das Wechseln einer standardisierten Ladeeinheit 1 zwischen Schienenfahrzeugen auf Gleis 6 und Gleis 6a über eine mobile Vorrichtung für die Lastbewegung in Y-Richtung (Y-Lastbewegung 9), oder einer fest installierten Einrichtung, wie einer Lagerbrücke in einem Terminal, durch Ausführung einer Abfolge von Z-Lastbewegung 2 -> X-Lastbewegung 3 -> Z-Lastbewegung 4 -> Y-Lastbewegung 9 -> Z-Lastbewegung 2 -> X-Lastbewegung 3 -> Z-Lastbewegung 4 und gegebenenfalls umgekehrt. Diese Operation ist identisch mit dem Umschlag gemäß Fig. 2, zuzüglich, dass das Sortierfahrzeug jede bereitgestellte oder entgegengenommene Ladeeinheit 1 temporär zwischenlagern wird.
Die Ladeeinheiten 1 werden nur zwischen Schienenfahrzeugen umgeladen, wobei parallel ausgeführte Operationen möglich sind. Zur Bedienung von mehr als zwei parallel liegenden Gleisen lässt sich diese Anordnung beliebig oft zeitgleich parallelisieren.

Bei der Lastaufnahme wird unterschieden nach dem Typ der standardisierten Ladeeinheit 1. Jede Ladeinheit 1 innerhalb dieses Systems bzw. Verfahrens wird bei Eintritt in den Transportlauf charakterisiert. Diese Charakterisierung erfolgt auf der Grundlage von beispielsweise Typ, Hersteller, laufender Nummer, Baujahr, Versionen und anderer typspezifischer Merkmale, sowie von aktuellen Daten über Zustand, Übermasse, Abweichungen vom typenmäßigen Stand. Zu jedem Typ der standardisierten Ladeeinheit 1 gehört ein Verfahren zum Handling und dafür vorgesehene Beschläge.

Grundsätzlich gilt: für alle Ladeeinheiten 1 ist die Lastaufnahme über die unteren Eck- und Beschläge vorgesehen. Alle drei Aspekte, wie Containerhandling, Maße von Containern und Eckbeschlägen, sind genormt.

Bei Wechselbrücken bzw. -behältern ist zu unterscheiden nach Ausführung mit und ohne Eckbeschläge wie bei ISO-Containern. Erstere werden wie Container manipuliert. Für die anderen Typen von Wechselbrücken ist die Verladung mit neuartigen Lastaufnahmemittel über gekennzeichnete Greifkanten vorgesehen.

Es sind auch Wechselbrücken im Verkehr, welche über Seiten beschläge im Grundrahmen in der Art wie Container verfügen. Es werden vorzugsweise nur die seitlichen Öffnungen oder Greifkanten an den Längsseiten der Ladeeinheiten1 genutzt.

Um einen ausfallsicheren automatischen Betrieb zu ermöglichen, muss die Lastaufnahme den Kriterien einer gesicherten Aufnahme zur Manipulation von Schwerlast entsprechen.

Die zentrale Forderung, einer fernsteuerbaren und fehlertoleranten Manipulation von Ladeeinheiten 1 lässt sich nur dann umsetzen, wenn ein Netz von Sensoren die Steuerungskomponenten mit verlässlichen und redundanten Informationen versorgt. Diese Aufgabe übernimmt gemäß Fig. 4 ein Erkennungsorgan 10, das ein optischen Erkennungssystem umfasst.

Das Erkennungsorgan 10 weist Messeinheiten 11 auf, die an allen vier Lastaufnahmepunkten angeordnet sind und die Parameter erfassen. Diese Parameter können sein: Position der Greifkanten 12 bzw. Öffnungen an den Beschlägen an der Ladeeinheit 1 bzw. im 3D-Raum, Position der Aufsetzzapfen 8 im 3D-Raum, störende Elemente am Unterboden der Ladeeinheit 1, auf der Ladefläche und sonstige Störungen des Aufnahme- und der Absetzvorganges, wie beispielsweise Lastungleichgewichte, angefrorene Ladeeinheiten 1, etc. Dazu verfügt die Messeinheit 11 über einen Messkopf 13, der über eine Bewegungsfähigkeit für Messaufgaben in Z- und Y-Richtung sowie gegebenenfalls über ein Multifocus-Objektiv verfügt. Der optische Messkopf 13 wird nur für Messaufgaben aus der vorzugsweise durch Bürsten geschützten Umgebung ausgefahren.

Die Messzeit der Messeinheiten 11 bewegt sich im Bereich von einigen Sekunden vor Auslösung der Z-Lastbewegung 2.

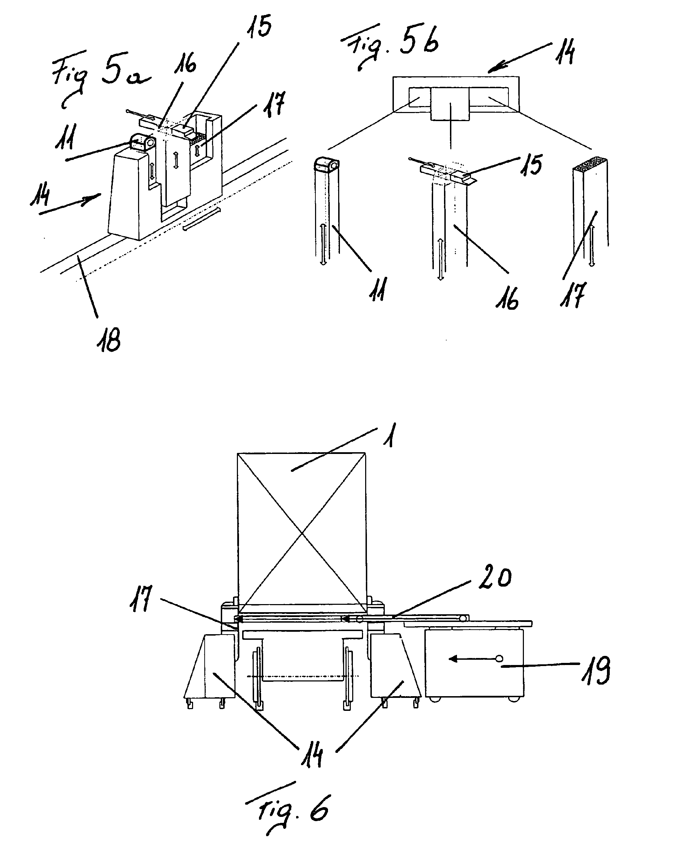

Entsprechend der Fig. 5a ist das Grundprinzip einer Verladehilfseinrichtung 14 und der Fig. 5b die schematische Ansicht der Verladehilfseinrichtung 14 dargestellt. Die Z-Lastbewegung 2 schließt drei Funktionen ein:
- die messtechnische Erfassung und Auswertung der Umgebungsdaten über die Messeinheit 11,
- das Fahren und Abstützen eines Last tragenden Kragarmes 15 einer Hebe- und Senkeinrichtung 16,
- das Positionieren eines Gegenlagers 17 für die X-Lastbewegung 3. Alle drei Funktionen werden in der Verladehilfseinrichtung 14 zusammengefasst

Die messtechnische Erfassung, sowie die Positionierfahrten des Kragarmes 15 und des Gegenlagers 17 erfolgen lastfrei. Nur die Hebe- bzw. Hubfunktion des Kragarmes 15 sowie die Abstützung als Gegenlager 16 finden unter Last statt.

Die Energiezuführung kann über Stromschienen 18 mit Schleifringen oder induktiv erfolgen.

Es können zwei grundverschiedene Ausführungen der Verladehilfseinrichtung 14 zum Einsatz kommen. Die erste Ausführung ist am Boden geführt und wird voraussichtlich in Hallen zum Einsatz gelangen, wobei in der Zeit ohne Zugbetrieb die Gleisanlage als Logistikflächen benutzt werden kann Die zweite Ausführung der Verladehilfseinrichtung 14 wird auf und zwischen Lastschienen betrieben. Diese zweite Ausführung wird voraussichtlich dann eingesetzt, wenn ein möglichst effizienter Umschlag oder Sortieren zwischen voll geladenen Güterzügen und deren Vorbereitungs- und Abfertigungsanlagen geboten werden muss.

Fig. 5a zeigt die am Boden geführte Ausführung. Der Hub- bzw. Hebevorgang ist besonders kritisch. Die Lastaufnahme ist in den Kragarm 15 so zu integrieren, dass der Kraftfluss zur Verankerung, im Sinne einer Selbstsicherung, genutzt wird. Außerdem ist die Kraft so abzuleiten, dass der Anteil an Schubkräften besonders hoch und der an Biegekräften sehr niedrig ist. Es ist zu versuchen, dass dies auch unter Störungsbedingungen, beispielsweise beim Auslassen eines Hubarmes während des Hub- oder Senkvorganges, gelten wird.

Durch die koordinierbare Steuerung von vier unabhängig voneinander steuerbaren Hebe- und Senkeinrichtungen 16 für eine Ladeeinheit 1 können Unregelmäßigkeiten prozesstechnisch erkannt und Gegenmaßnahmen eingeleitet werden.

Gemäß der Fig. 6 ist das Grundprinzip einer mobilen Verschiebe-Einheit 19 aufgezeigt.
Die X-Lastbewegung 3 wird als quer zum Güterwagen oder LKW auszuführende Verschiebung einer Ladeeinheit 1 durch die Verschiebe-Einheit ausgeführt. Die Funktionen dieser Einheit sind folgende:
Positionieren der Verschiebe-Einheit 19 nach Angaben der zugeordneten Verladehilfseinrichtung 14.
Gegebenenfalls Herstellen eines mechanischen Kraftschlusses zu Verladehilfseinrichtung 14.
Ausfahren von Auslegern 20 bis zum Gegenlager 17.
Brücke und Lastaufnahmeschlitten lastgerecht positionieren;
Verschieben der Ladeeinheit 1.
Die Abfolge ist beim Abladen und beim Aufladen verschieden.

Die Verschiebe-Einheit 19 operiert nur in Abstimmung mit den zugeordneten Verladehilfseinrichtungen 14.

Die Verschiebe-Einheit 19 kann als autonome Einheit beispielsweise auf einem Schwerlastanhänger montiert sein. Die am Boden geführten Verladehilfseinrichtungen 14 stellen für die Umladebrücke die Gegenlager 17 bereit. Die Verladehilfseinrichtung 14 übernimmt die Last auf den Anhänger und ist nach Abbau der Brücke im Terminal - beispielsweise mittels Traktor - frei verfahrbar.

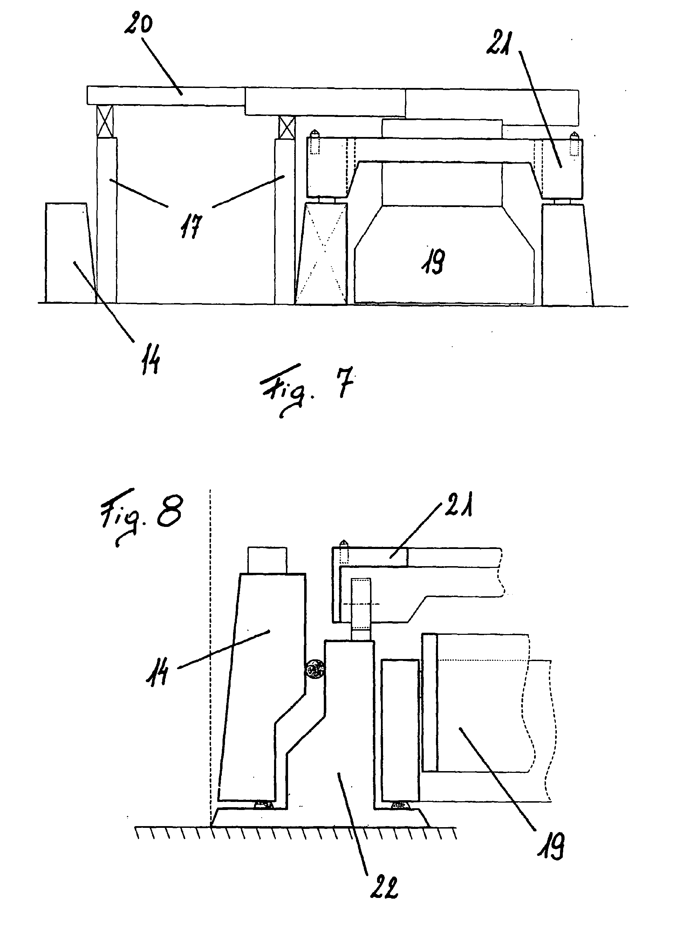

Gemäß der Fig. 7 ist ein Ausführungsbeispiel für eine auf Schienen geführte Verschiebe-Einheit 19 gezeigt. Die Verschiebe-Einheit 19 ist Teil eines hocheffizienten Umschlagsystems. Hierbei wird die lasttragende Funktion auf die Verschiebebewegung eingeschränkt. Nach Übernahme der Last durch das Sortierfahrzeug 21 (Y-Lastbewegung 9) im Abladensfall positioniert sich die Verschiebe-Einheit 19 lastfrei wieder in die - niedriger bauende - Verfahrposition in Y-Richtung.

Gemäß der Fig. 8 ist eine Ausführung des Umladesystems mit einer Lastschiene 22 gezeigt. In diesem Fall müssen die Bewegungen schnell und zügig ablaufen, da die Geschwindigkeit der Operationen der Verschiebe-Einheit 19 die Leistungsfähigkeit des Umschlages bestimmt.

Die Bewegung in Y-Lastrichtung 9, also entlang des Hauptgleises, ist notwendig, wenn eine Ladeeinheit 1 nicht direkt zwischen zwei Fahrzeugen umgeschlagen werden soll. Dies ist beispielsweise beim Sortieren von Ladeeinheiten 1 der Fall. Die Sortierfahrzeuge 21 eignen sich insbesondere bei einem Schiene-Schiene-Umschlag. Diese laufen dann auf Lastschienen 22 mit einfachen Antrieb und geteilter Positionierungsteuerung: Entlang der gesamten Wagenlänge wird die Position über eine Terminalsteuerung und im manipulationsnahen Bereich durch die lokale Steuerung, d.h. die Haupt-Steuerung in einer Verladehilfseinrichtung 14, übernommen.

Bodengeführte Systeme führen die Y-Lastbewegung 9 mittels Sortierfahrzeugen 21, die als Transportwagen ausgebildet sind, durch. Ferner werden die Sortierfahrzeuge 21 im manipulationsnahen Bereich stets von der führenden Verladehilfseinrichtung 14 gesteuert.

### Das vorliegende Umladesystem wird unter drei Aspekten organisiert:

Als minimalste Betriebausstattung sind ein Quartett von Verladehilfseinrichtungen 14 und eine Verschiebe-Einheit 19 notwendig. Die betrachtete Länge der Ladegleise beträgt etwa 6 Meter. Alle anderen Konfigurationen sind davon ableitbar. Eine dieser 5 Elemente muss die organisatorische Führung des Ablaufes übernehmen.

Um das in Rede stehende Umladesystem wirklich effizient nützen zu können, wird spätestens im Stillstand des Zuges bzw. Fahrzeuges in seiner Verladeposition über ein - nicht dargestelltes - Erkennungssystem die Position der Ladeeinheiten 1 und der freien Flächen erfasst wird. Das Erkennungssystem kann ein Videosystem mit selektiver OCR Erkennung und Dokumentation sein. Natürlich kann das Erkennungssystem auch auf Basis der RFID (Radio Frequency Identification) - Technologie aufgebaut sein. Weiters wird über das Erkennungssystem mindestens eine, vorzugsweise eine selbstfahrende, Verladehilfseinrichtung 14 im Bereich der zu verladenden Ladeeinheit 1 positioniert. Über ein Erkennungsorgan 10 wird die Lastaufnahmefläche der Ladeeinheit 1 zur Verladung erfasst. Es wird eine formschlüssige Verbindung zwischen einer Hebe- und Senkeinrichtung 16 mit einer, vorzugsweise ladeflächennahen, Lastaufnahmefläche der Ladeeinheit 1 hergestellt. Die Hebe- und Senkeinrichtung 16 hebt die Ladeeinheit 1 in z-Richtung an. Mindestens ein Ausleger 20 wird in x-Richtung einer Verschiebe-Einheit 19 aus der Bereitschaftsstellung unter die Ladeeinheit 1 ausgefahren. Die Hebe- und Senkeinrichtung 16 senkt die Ladeeinheit 1 in z-Richtung auf den Ausleger ab. Die Ladeeinheit 1 wird in x-Richtung über die Verschiebe-Einheit 19 in die neue Position bewegt. Der Ausleger 20 wird in seine Bereitschaftsstellung eingefahren.

Natürlich ist eine noch wirtschaftlichere Nutzung des Umladesystems gegeben, wenn vor dem bzw. spätestens im Stillstand des Zuges bzw. Fahrzeuges in seiner Verladeposition über ein Erkennungssystem die Waggons bzw. Anhänger, die Waggonfolge und die Ladeeinheiten 1 identifiziert und erfasst werden. Ebenso trägt es zur Effizienz des Umladesystems weiters bei, wenn am ausfahrenden Zug bzw. Fahrzeug über ein Erkennungssystem die Waggons bzw. Anhänger, die Waggonfolge und die Ladeeinheiten identifiziert und erfasst werden. Die über das Erkennungssystem erfassten Daten werden an eine Datenverarbeitungsanlage, vorzugsweise an eine zentrale Datenverarbeitungsanlage, weitergegeben, in der die Logistik erstellt wird und gegebenenfalls die entsprechenden Daten an weitere Terminals entlang der Transportkette weitergegeben bzw. übertragen werden. Über die Logistik erfolgt dann die Positionierung der Verladehilfseinrichtungen.

Die Datenverarbeitungsanlage, insbesondere eine zentrale Datenverarbeitungsanlage, verarbeitet alle Daten der peripheren Einrichtungen, wie des Erkennungssystems, der Verladehilfseinrichtungen 14 und der Verschiebe-Einheiten 19 und führt auch die Logistik durch. Über die Datenverarbeitungsanlage ist auch die Anzahl der Verladehilfseinrichtungen 14, deren Positionierung und die Kooperation mit der Verschiebe-Einheit 19 steuerbar.

Dieses Umladesystem ist skalierbar. Neu hinzukommende Verschiebe-Einheiten (X-Einheit) 19 bzw. Verladehilfseinrichtungen (Z-Einheit) 14 und Sortierfahrzeuge (Y-Einheit) 21 melden sich an und werden automatisch innerhalb kürzester Zeit in den Verbund aufgenommen. Das gilt für alle hinzukommenden X-, Y- und Z-Einheiten. Dasselbe gilt, wenn Einheiten nicht mehr benötigt werden und daher abgezogen werden.

Eine Z-Einheit darf den Betrieb nicht stören. Bei Defekt hat sich diese aus dem operativen Quartett zu nehmen und ihre nächstliegende muss ihre Aufgabe übernehmen einschließlich eines Verschiebevorganges der Defekten.

Dies hat die Steuerungsarchitektur zu beachten. Es wird an jedem Terminal eine Terminalkommunikations- und Steuerungssoftware geben, welche grundsätzlich zwei Funktionen hat:
Funktion eines Umladesystems zur Einbindung des Terminals in das Transportnetz und Bereitstellung der Informationen aus dem Terminal an das Transportnetz;
Koordination der innerbetrieblichen Hauptfunktionsträger: Sicherungstechnik, insbesondere bahntechnisch, Sicherungstechnik innerhalb des Terminals, Management von Materialfluss im Terminal, Umschlagsystem, Positionen der Ressourcen und der Kapazitäten, Planung und Datenmanagement.

Das Kernstück einer hocheffizienten Schnittstelle für die Bahn zur Erbringung einer hochwertigen Servicedienstleistung ist das Umladesystem mit seiner Fähigkeit der schnellen Be- und Entladung an der Strecke. Diese Funktion kann auch am Abgangs- und Endbahnhof einer Strecke oder an Konsolidierungspunkten entlang der Strecke installiert werden.

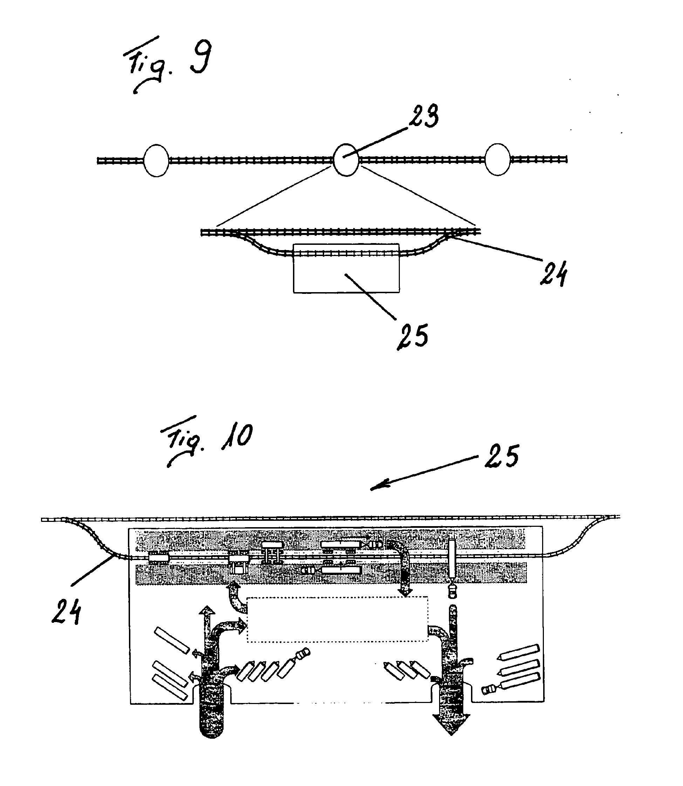

Gemäß der Fig. 9 ist das wesentlich Neue durch das Umladesystem aufgezeigt, nämlich die Zuladungsmöglichkeit an aufkommensstarken Bahnhöfen und Anschlussgleisen, beispielsweise am Knoten 23, entlang der Strecke ohne Zug- und Wagenmanipulation. Zur Bildung von schnellen Transportnetzen müssen an geeigneten Streckenabschnitten Service und/oder Ausweichgleise 24 verfügbar sein, an denen Installationen eines oder mehrerer Umladesysteme möglich sind.

Um sowohl die Prozesse für die bahnaffinen, logistischen Services als auch die Flächennutzung effizienter zu gestalten werden neuartige Terminals 25 mit Umladesystemen, wie hier aufgezeigt, vorgeschlagen. Diese Terminals 25 sind neu im Sinne einer Integration von Bahnbetrieb, Terminalgestaltung, logistische Abläufe und Serviceinhalten und versprechen eine völlige Neugestaltung und Neudefinition von bahnaffinen Servicedienstleistungen. Siehe dazu Fig. 10.

Dieses Terminal 25 ist nur für die Bahnoperation während der erforderlichen Zeitspanne eingerichtet. Nur während dieser Zeit gelten sämtliche bahntechnischen und Bahn-betriebsrechtlichen Bedingungen.
Während der übrigen Zeit des Tages wird das Terminal 25 als normale Betriebshalle zur Erbringung von logistischen Services betrachtet.

Die Energieübertragung in den Terminals 25 kann über Stromschienen und Schleifringe erfolgen. Es ist in Zukunft denkbar, dass bei bodengeführten Anlagenteilen auch induktive Energieübertragungssysteme vorzusehen sind.

Es soll auch unterschieden werden zwischen bodengeführten Anlagen mit Hilfsschienen und Anlagen mit Lastschienen (siehe dazu auch Fig. 5a und Fig. 7 und 8). Bei einer bodengeführten Anlage sollten der Hallenboden eben und die Gleise, beispielsweise Rillengleise, samt Hilfsschienen überfahrbar sein für Fahrzeuge des Lastentransportes. Die Hilfsschienen dienen der Spurführung, der Energiezuführung und der Abstützung der Z-Einheiten im Belastungsfall. Die Energiezufuhr soll über Stromschienen und Schleifkontakte oder geeignete andere Verfahren erfolgen. Die Steuerung kann entweder über Schienensystem und/oder drahtlos erfolgen.

Die Angaben für die Terminalkonstruktion gelten für den Fall eines Terminals 25 mit Service- oder Ausweichgleis 24 als Knoten 23 für den Zugang zu einem schnellen Transportnetz. Solche Terminals 25 können mit bodengeführten Anlagen oder mit Anlagen mit einer Lastschiene ausgestattet werden.

Die Terminalkonstruktion hat mehrere Funktionen zu vereinigen:
Die primäre Funktion ist die einer Halle als einer logistisch genutzten Immobilie an einem dafür prädestinierten Standort. Dies kann folgende Funktionen umfassen:
die Funktion einer Lagerhalle,
eines Vorfeldgebäudes (z.B. an einem Flughafen),
eines Sammel- oder Umladeterminals mit Lkw-Andockstationen,
eines Distributionszentrums,
einer Werkhalle für Anlieferung oder Auslieferung von Produkten.

Hinzu kommt im Falle schneller Transportnetze die Funktion eines temporär benutzbaren Service- oder Ausweichgleises 24. Im Folgenden soll nur dieser Aspekt weiter betrachtet werden. Die wichtigsten Parameter bei der Konstruktion des Terminals 25 sind die folgenden:
Länge des Umschlagbereiches: dieser Parameter bestimmt die Umschlagsleistung eines Knoten. Er wird durch die maximale Zuglänge, die möglichen Restriktionen bei der Festlegung des Ortes der umzuschlagenden Ladeeinheit auf diesem Zug, der maximalen Länge der Service- oder Ausweichgleise sowie der Lage des
Terminals 25 am Service- oder Ausweichgleis bestimmt.
Höhe des Terminals 25: dieser Parameter wird durch die Vorschriften zur Durchführung einer Stromleitung durch eine Halle bestimmt.
Fläche und Aufteilung des Terminals 25 nach Sektoren: mit Hilfe eines Szenarios wird eine Materialflussanalyse durchgeführt und ein Flächennutzungsplan entwickelt. Im Ziel ist dabei zu erreichen, dass die Wertschöpfung pro Flächeneinheit im Gleisbereich gleich hoch wird, wie die in den übrigen Bereichen des Terminals 25.

Ein Terminal 25 erfüllt innerhalb eines schnellen Transportnetzes die Aufgabe eines effizienten und kostengünstigen Zugangspunktes für standardisierte Ladeeinheiten 1. Dazu muss das Terminal 25 entlang einer Strecke aus beiden Richtungen bedienbar sein.

In der derzeitigen Schieneninfrastruktur liegen Service- oder Ausweichgleise 24 vorwiegend in Bahnhofsbereichen und werden als Überholgleise genutzt. Es gibt jedoch auch einige Anschlussbahnen mit derartigen Gleisen.

Die Identifikation von Ladeeinheiten, Waggons und Zügen wird im Schienen-Güterverkehr dadurch erschwert, dass keine eigenen Energiequellen an den beiden Erstgenannten verfügbar sind. Der Einfachheit halber wird angenommen, dass für schnelle Transportnetze Systeme vom Stand der Technik eingesetzt werden.

Abschließend sei der Ordnung halber darauf hingewiesen, dass in der Zeichnung einzelne Bauteile und Baugruppen zum besseren Verständnis der Erfindung unpropotional und maßstäblich verzerrt dargestellt sind.

## Patentansprüche

1. Verfahren zum Um- bzw. Verladen von mindestens einer Ladeeinheit, insbesondere eines Containers oder einer Wechselbrücke, von einem Eisenbahnwaggon auf einen anderen oder von einem Eisenbahnwaggon auf ein Fahrzeug, insbesondere einen Lastkraftwagen, oder einen Abstellplatz oder von einem Fahrzeug auf ein weiteres Fahrzeug oder einen Abstellplatz oder umgekehrt, wobei
- spätestens im Stillstand des Zuges bzw. Fahrzeuges in seiner Verladeposition über ein Erkennungssystem die Position der Ladeeinheiten (1) und der freien Ladeflächen erfasst wird,
- über das Erkennungssystem mindestens eine, vorzugsweise eine selbstfahrende, Verladehilfseinrichtung (14) im Bereich der zu verladenden Ladeeinheit (1) positioniert wird,
- über ein Erkennungsorgan (10) die Lastaufnahmefläche der Ladeeinheit (1) zur Verladung erfasst wird,
- eine formschlüssige Verbindung zwischen einer Hebe- und Senkeinrichtung (16) mit einer, vorzugsweise ladeflächennahen, Lastaufnahmefläche der Ladeeinheit (1) hergestellt wird,
- die Hebe- und Senkeinrichtung (16) die Ladeeinheit (1) in z-Richtung anhebt,
- mindestens ein Ausleger (20) in x-Richtung einer Verschiebe-Einheit (19) aus der Bereitschaftsstellung unter die Ladeeinheit (1) ausgefahren wird,
- die Hebe- und Senkeinrichtung (16) die Ladeeinheit (1) in z-Richtung auf den Ausleger (20) absenkt,
- die Ladeeinheit (1) in x-Richtung über die Verschiebe-Einheit (19) in die neue Position bewegt wird,
- der Ausleger (20) in seine Bereitschaftsstellung eingefahren wird.

2. Verfahren nach Anspruch 1, **dadurch gekennzeichnet, dass** mehrere Umladevorgänge an einem Zug bzw. Fahrzeug zeitgleich und/oder parallel durchgeführt werden.

3. Verfahren nach Anspruch 1 oder 2, **dadurch gekennzeichnet, dass** zum Sortieren der Ladeeinheiten (1) diese in y-Richtung mit Sortierfahrzeugen (21) verfahren werden.

4. Verfahren nach einem oder mehreren der Ansprüche 1 bis 3, **dadurch gekennzeichnet, dass** die Verladebewegungen unter dem stromführenden Fahrdraht (5) mit einem Sicherheitsabstand zur Vermeidung von Überschlägen durchgeführt werden.

5. Verfahren nach einem oder mehreren der Ansprüche 1 bis 4, **dadurch gekennzeichnet, dass** die einzelnen aneinander gefügten Verfahrensschritte zum Um- bzw. Verladen von mindestens einer Ladeeinheit (1) automatisiert, insbesondere ohne Bedienungspersonal, durchgeführt werden.

6. Verfahren nach einem oder mehreren der Ansprüche 1 bis 5, **dadurch gekennzeichnet, dass** vor dem Stillstand des Zuges bzw. Fahrzeuges in seiner Verladeposition über ein Erkennungssystem die Waggons bzw. Anhänger, die Waggonfolge und die Ladeeinheiten (1) identifiziert und erfasst werden.

7. Verfahren nach einem oder mehreren der Ansprüche 1 bis 6, **dadurch gekennzeichnet, dass** im Stillstand des Zuges bzw. Fahrzeuges in seiner Verladeposition die genaue Position des Zuges und/oder die Position der Waggons bzw. Anhänger bzw. deren Achsen erfasst wird.

8. Verfahren nach einem oder mehreren der Ansprüche 1 bis 6, **dadurch gekennzeichnet, dass** spätestens im Stillstand des Zuges bzw. des Fahrzeuges in seiner Verladeposition der Zustand der Ladeeinheiten (1) für das Abladen, insbesondere die Art der Lastaufnahmefläche, erfasst wird.

9. Verfahren nach einem oder mehreren der Ansprüche 1 bis 8, **dadurch gekennzeichnet, dass** über ein Erkennungsorgan der Zustand der Unterflächen der Ladeeinheit (1) und/oder der Ladefläche und/oder der Sicherungszapfen erfasst und verifiziert wird.

10. Verfahren nach einem oder mehreren der Ansprüche 1 bis 9, **dadurch gekennzeichnet, dass** am ausfahrenden Zug bzw. Fahrzeug über ein Erkennungssystem die Waggons bzw. Anhänger, die Waggonfolge und die Ladeeinheiten identifiziert und erfasst werden.

11. Verfahren nach einem oder mehreren der Ansprüche 1 bis 10, **dadurch gekennzeichnet, dass** die über das Erkennungssystem erfassten Daten an eine Datenverarbeitungsanlage, vorzugsweise an eine zentrale Datenverarbeitungsanlage, weitergegeben werden, in der die Logistik erstellt wird und gegebenenfalls die entsprechenden Daten an weitere Terminals entlang der Transportkette weitergegeben bzw. übertragen werden.

12. Verfahren nach Anspruch 11, **dadurch gekennzeichnet, dass** über die Logistik die Positionierung der Verladehilfseinrichtungen (14) erfolgt.

13. Umladesystem zur Durchführung des Verfahren nach einem oder mehreren der Ansprüche 1 bis 12, wobei
- ein Erkennungssystem zur Erfassung der Position der Ladeeinheiten (1) und der freien Flächen vorgesehen ist,
- mindestens eine, vorzugsweise selbstfahrende, Verladehilfseinrichtung (14) vorgesehen ist, die auf einem parallel zum Verladegleis angeordneten Hilfstransportweg, insbesondere auf einem Hilfstransportgleis, verfahrbar ist,
- die Verladehilfseinrichtung (14) mindestens ein Erkennungsorgan (10) für die Erfassung der Lastaufnahmefläche der Ladeeinheit (1) zur Verladung und eine Hebe- und Senkeinrichtung (16) für die Bewegung der Ladeeinheit (1) in z-Richtung aufweist,
- mindestens eine, gegebenenfalls auf einem weiteren Hilfstransportweg verfahrbare, Verschiebe-Einheit (19) mit mindestens einem Ausleger (20) vorgesehen ist.

14. Umladesystem nach Anspruch 13, **dadurch gekennzeichnet, dass** das Erkennungssystem ein Videosystem mit selektiver OCR Erkennung und Dokumentation ist.

15. Umladesystem nach Anspruch 13 oder 14, **dadurch gekennzeichnet, dass** das Erkennungssystem auf Basis der RFID (Radio Frequency Identification) - Technologie aufgebaut ist.

16. Umladesystem nach einem oder mehreren der Ansprüche 13 bis 15, **dadurch gekennzeichnet, dass** die Verladehilfseinrichtung (14) mindestens ein Erkennungsorgan (10) in Form einer optischen, bewegungsfähigen Messeinheit (11) , gegebenenfalls ein Multifocus-Objektiv aufweist, die an einem Lastaufnahmepunkt der Ladeeinheit (1) die Parameter, wie beispielsweise die Position der Greifkanten (12) und/oder der Aufsetzzapfen und/oder die Flächenbeschaffenheit von Ladeeinheit (1), Ladefläche und/oder Lastungleichgewichte bzw. witterungsbedingte Störungen erfasst.

17. Umladesystem nach einem oder mehreren der Ansprüche 13 bis 16, **dadurch gekennzeichnet, dass** die Verladehilfseinrichtung (14) mindestens eine Hebe- und Senkeinrichtung (16) aufweist, die aus einem lasttragenden Kragarm (15) besteht.

18. Umladesystem nach einem oder mehreren der Ansprüche 13 bis 17, **dadurch gekennzeichnet, dass** die Verladehilfseinrichtung (14) mindestens ein Gegenlager (17) für die Abstützung des Auslegers (20) einer korrespondierenden Verschiebe-Einheit (19) aufweist.

19. Umladesystem nach einem oder mehreren der Ansprüche 13 bis 18, **dadurch gekennzeichnet, dass** die Verladehilfseinrichtungen (14) beidseitig, parallel zum Verladegleis mit ihren Hilfstransportwegen vorgesehen sind und zum Um- bzw. Verladen einer Ladeeinheit (1) zwei, vorzugsweise vier oder mehr, Verladehilfseinrichtungen (14) im Bereich der zu verladenden Ladeeinheit (1) positioniert sind.

20. Umladesystem nach einem oder mehreren der Ansprüche 13 bis 19, **dadurch gekennzeichnet, dass** die Verschiebe-Einheit (19) selbstfahrend oder mit einer Zugmaschine verfahrbar ist.

21. Umladesystem nach einem oder mehreren der Ansprüche 13 bis 20, **dadurch gekennzeichnet, dass** zum Sortieren der Ladeeinheiten in y-Richtung Sortierfahrzeuge (21) vorgesehen sind.

22. Umladesystem nach Anspruch 20 oder 21, **dadurch gekennzeichnet, dass** die Verschiebe-Einheit (19) und das Sortierfahrzeug (21) ein Kombinationsfahrzeug ist.

23. Umladesystem nach einem oder mehreren der Ansprüche 13 bis 22, **dadurch gekennzeichnet, dass** eine Datenverarbeitungsanlage, insbesondere eine zentrale Datenverarbeitungsanlage, vorgesehen ist, die alle Daten der peripheren Einrichtungen, wie Erkennungssystem, Verladehilfseinrichtungen (14) und Verschiebe-Einheit (19), verarbeitet und die Logistik durchführt.

24. Umladesystem nach Anspruch 23, **dadurch gekennzeichnet, dass** über die Datenverarbeitungsanlage die Anzahl der Verladehilfseinrichtungen (14), deren Positionierung und die Kooperation mit der Verschiebe-Einheit (19) steuerbar ist.

25. Umladesystem nach Anspruch 23 oder 24, **dadurch gekennzeichnet, dass** hinzu- oder hinwegkommende Verladehilfseinrichtungen (14) sich selbsttätig über die Datenverarbeitungsanlage im Verbund an- bzw. abmelden.

26. Terminal mit einem Umladesystem gemäß einem oder mehreren der Ansprüche 13 bis 25, wobei dieser zwischen zwei Endbahnhöfen angeordnet ist, eisenbahnsicherungstechnisch und logistisch einen Knoten (23) bildet und mindestens ein weiteres Gleis, beispielsweise ein Service-Gleis und/oder ein Ausweichgleis, das, gegebenenfalls über fernsteuerbare Gleisweichen, mit einem Hauptgleis verbunden ist, aufweist.

27. Terminal nach Anspruch 26, **dadurch gekennzeichnet, dass** die Service-Gleise und/oder Ausweichgleise im Terminalbereich als Rillengleise und die Hilfstransportgleise als Rundschienen ausgeführt sind.

## Claims

1. Method for reloading or loading at least one loading unit, in particular a container or a swap body, from one railway carriage to another or from a railway carriage to a vehicle, in particular a lorry, or a storage place, or from one vehicle to another vehicle or a storage place or vice versa, whereby
- the position of the loading unit (1) and the free loading surfaces are recorded at the latest upon the train or vehicle coming to a halt in the loading positions thereof by means of a detection system,
- at least one, preferably automotive loading auxiliary device (14) is positioned in the vicinity of the loading unit (1) to be loaded by means of the detection system,
- the loading surface of the loading unit (1) for loading is recorded by means of a detector body (10),
- an interlocking connection between a hoisting device (16) and a loading surface of the loading unit (1) that is preferably close to the loading area is generated,
- the hoisting device (16) lifts the loading unit (1) along the axis z,
- at least one boom (20) is extended from an idle position under the loading unit (1) along the axis x by a displacement unit (19),
- the hoisting device (16) lowers the loading unit (1) onto the boom (20) along the axis z,
- the loading unit (1) is moved to the new position along the axis x by means of the displacement unit (19),
- the boom (20) is withdrawn to the idle position thereof.

2. Method in accordance with Claim 1, **characterised by** the fact that several reloading processes are performed simultaneously and/or in parallel on a train or vehicle.

3. Method in accordance with Claim 1 or 2, **characterised by** the fact that loading units (1) are moved along the axis y for the purpose of sorting these using sorter vehicles (21).

4. Method in accordance with one or more of Claims 1 to 3, **characterised by** the fact that the loading movements below the live overhead wire (5) are performed at a safety distance in order to prevent flashovers.

5. Method in accordance with one or more of Claims 1 to 4, **characterised by** the fact that the linked individual process steps for reloading or loading of at least one loading unit (1) are performed in an automated way, in particular without operating personnel.

6. Method in accordance with one or more of Claims 1 to 5, **characterised by** the fact that the carriages or trailers, the carriage sequence and the loading units (1) are identified and recorded prior to the train or vehicle coming to a halt in the loading positions thereof by means of a detection system.

7. Method in accordance with one or more of Claims 1 to 6, **characterised by** the fact that the exact position of the train and/or the position of the carriages or trailers or their axles are recorded upon the train or vehicle coming to a halt in the loading positions thereof.

8. Method in accordance with one or more of Claims 1 to 6, **characterised by** the fact that the condition of the loading units (1), in particular the type of loading surface is recorded for offloading at the latest upon the train or vehicle coming to a halt in the loading position thereof.

9. Method in accordance with one or more of Claims 1 to 8, **characterised by** the fact that the condition of the bottom surfaces of the loading unit (1) and/or the loading area and/or the safety pivots is recorded and verified by means of a detector body.

10. Method in accordance with one or more of Claims 1 to 9, **characterised by** the fact that the carriages or trailers, the carriage sequence and the loading units are identified and recorded on the departing train or vehicle by means of a detection system.

11. Method in accordance with one or more of Claims 1 to 10, **characterised by** the fact that the data recorded by means of the detection system is passed on to a data processing system, preferably to a central data processing system, in which the logistics are generated and the relevant data is passed on or transferred to other terminals along the transport chain, if required.

12. Method in accordance with 11, **characterised by** the fact that the loading auxiliary devices (14) are positioned by means of the logistics.

13. Reloading system for implementation of the said method in accordance with one or more of Claims 1 to 12, whereby
- a detection system is planned for recording the position of the loading units (1) and the free surfaces,
- at least one, preferably automotive loading auxiliary device (14) is planned, which can be moved along an auxiliary transport route located in parallel to the loading track, in particular on an auxiliary transport track,
- the loading auxiliary device (14) has at least one detector body (10) to record the loading surface of the loading unit (1) for loading and a hoisting device (16) for movement of the loading unit (1) along the axis z,
- at least one displacement unit (19) with at least one boom (20) is planned, which can be moved along another auxiliary transport route if necessary.

14. Reloading system in accordance with Claim 13, **characterised by** the fact that the detection system is a video system using selective OCR recognition and documentation.

15. Reloading system in accordance with Claim 13 or 14, **characterised by** the fact that the detection system is set up on the basis of RFID (radio frequency identification) technology.

16. Reloading system in accordance with one or more of Claims 13 to 15, **characterised by** the fact that the loading auxiliary device (14) has at least one detector body (10) in the form of an optical, mobile measuring unit (11), possibly a multi-focus lens that records the parameters on a load suspension point of the loading unit (1), such as for example the position of the longitudinal recesses for handling (12) and/or the mounting pivots and/or the surface condition of the loading unit (1), loading area and/or load imbalances or weather-related interferences.

17. Reloading system in accordance with one or more of Claims 13 to 16, **characterised by** the fact that the loading auxiliary device (14) has at least one hoisting device (16) consisting of a load-bearing cantilever arm (15).

18. Reloading system in accordance with one or more of Claims 13 to 17, **characterised by** the fact that the loading auxiliary device (14) has at least one thrust bearing (17) to support the boom (20) of a corresponding displacement unit (19).

19. Reloading system in accordance with one or more of Claims 13 to 18, **characterised by** the fact that the loading auxiliary devices (14) are planned on both sides, in parallel to the loading track with their auxiliary transport routes, and for reloading or loading of a loading unit (1), two, preferably four or more loading auxiliary devices (14) are positioned in the vicinity of the loading unit (1) to be loaded.

20. Reloading system in accordance with one or more of Claims 13 to 19, **characterised by** the fact that the displacement unit (19) is automotive or moveable using a traction engine.

21. Reloading system in accordance with one or more of Claims 13 to 20, **characterised by** the fact that sorter vehicles (21) are planned for sorting of the loading units along the axis y.

22. Reloading system in accordance with Claim 20 or 21, **characterised by** the fact that the displacement unit (19) and the sorter vehicle (21) is a multipurpose vehicle.

23. Reloading system in accordance with one or more of Claims 13 to 22, **characterised by** the fact that a data processing system, in particular a central data processing system is planned, which processes all data of the peripheral devices, such as detection system, loading auxiliary devices (14) and displacement unit (19), and performs the logistics.

24. Reloading system in accordance with Claim 23, **characterised by** the fact that the number of loading auxiliary devices (14), their positioning and the cooperation with the displacement unit (19) can be controlled by means of the data processing system.

25. Reloading system in accordance with Claim 23 or 24, **characterised by** the fact that additional or deductible loading auxiliary devices (14) log in to or off from the pool independently by means of the data processing system.

26. Terminal with a reloading system in accordance with one or more of Claims 13 to 25, whereby this is located between two terminal stations, forms a junction (23) from a railway safety engineering-related and logistic perspective, and has at least one additional track (for example a service track and/or a passing track) that is connected with a main track, possibly by means of remote controllable track switches.

27. Terminal in accordance with Claim 26, **characterised by** the fact that the service tracks and/or passing tracks are designed as groove tracks within the terminal area and the auxiliary transport tracks are designed as round tracks.

## Revendications

1. Procédé permettant le transbordement ou le chargement d'au moins une unité de chargement, notamment d'un conteneur ou d'un pont de change, d'un wagon ferroviaire à un véhicule, notamment à un camion ou une aire de stockage, ou d'un véhicule à un autre véhicule ou une aire de stockage ou vice versa,
- la position des unités de chargement (1) et des surfaces de chargement libres étant reconnue et saisie au plus tard lorsque le train ou le véhicule est à l'arrêt et en position de chargement,
- un dispositif auxiliaire de chargement (14) automobile de préférence, étant positionné par le système de détection dans la zone de l'unité de chargement (1) à charger,
- la surface de réception de la charge de l'unité de chargement (1) étant saisie par un organe de détection (10),
- un raccord affleuré entre une installation de levage et de descente (16) d'une part, et une surface de réception, de préférence proche de la surface de chargement, située sur l'unité de chargement (1) étant mis en place,
- l'installation de levage et de descente (16) levant l'unité de chargement (1) en direction de z,
- un bras (20) minimum faisant partie de l'unité de déplacement (19) étant étendu en direction de x à partir de sa position de veille jusqu'en-dessous de l'unité de chargement (1),
- l'installation de levage et de descente (16) descendant l'unité de chargement (1) en direction de z jusqu'au bras (20),
- l'unité de chargement (1) étant mue en direction de x au-dessus de l'unité de déplacement (19) vers la nouvelle position,
- le bras (20) enclenchant dans sa position de veille.

2. Procédé selon la revendication 1, **caractérisé par le fait que** plusieurs opérations de transbordement peuvent être effectuées simultanément et/ou en parallèle sur un seul train ou un seul véhicule.

3. Procédé selon les revendications 1 ou 2, **caractérisé par le fait que** pour trier les unités de chargement (1), celles-ci sont déplacées en direction «y » par des véhicules de tri (21).

4. Procédé selon l'une ou plusieurs des revendications 1 à 3, **caractérisé par le fait que** les mouvements de chargement sous le caténaire sous tension (5) sont effectués à un écart de sécurité pour éviter des éclats.

5. Procédé selon l'une ou plusieurs des revendications 1 à 4, **caractérisé par le fait que** les différentes étapes individuelles consécutives de transbordement ou de chargement d'une unité de chargement (1) minimum sont automatisées et effectuées notamment sans opérateurs.

6. Procédé selon l'une ou plusieurs des revendications 1 à 5, **caractérisé par le fait qu'**avant l'arrêt d'un train ou d'un véhicule dans sa position de chargement les wagons ou remorques, la suite des wagons et des unités de chargement (1) est identifiée et saisie par un système de détection.

7. Procédé selon l'une ou plusieurs des revendications 1 à 6, **caractérisé par le fait qu'**à l'arrêt du train ou du véhicule dans sa position de chargement, la position exacte du train et/ou la position des wagons ou des remorques ou de leurs axes est détectée.

8. Procédé selon l'une ou plusieurs des revendications 1 à 7, **caractérisé par le fait qu'**au plus tard à l'arrêt du train ou du véhicule dans sa position de chargement, l'état des unités de chargement (1) pour la décharge, et notamment la nature de la surface de réception de la charge, est détecté.

9. Procédé selon l'une ou plusieurs des revendications 1 à 8, **caractérisé par le fait que** l'état des surfaces en-dessous de l'unité de chargement (1) et/ou de la surfaces de chargement et/ou des pivots de sécurité est détecté par un organe de détection.

10. Procédé selon l'une ou plusieurs des revendications 1 à 9, **caractérisé par le fait que** sur le train ou le véhicule sortant, les wagons ou remorques, la suite des wagons et des unités de chargement sont détectés et saisie par un système de détection.

11. Procédé selon l'une ou plusieurs des revendications 1 à 10, **caractérisé par le fait que** les données saisies par un système de détection, sont transférées à une installation de traitement des données, de préférence à une installation de traitement des données centrales, dans laquelle la logistique est établie, et que les données correspondantes sont transférées ou communiquées le cas échéant à d'autres terminaux situés le long de la chaîne de transport.

12. Procédé selon la revendication 11, **caractérisé par le fait que** via la logistique, le positionnement des dispositifs auxiliaires de chargement (14) est effectué.

13. Système de transbordement permettant la mise en oeuvre du procédé selon l'une ou plusieurs des revendications 1 à 12,
- un système de détection de la position des unités de chargement (1) et des surfaces libres étant prévu,
- un dispositif auxiliaire de chargement (14) au moins, de préférence automobile, étant prévu, qui se déplace sur un chemin de transport auxiliaire situé en parallèle aux rails de chargement,
- le dispositif auxiliaire de chargement (14) étant doté d'un organe de détection (10) au moins, permettant la saisie de la surface de réception de la charge de l'unité de chargement (14), ainsi que d'une installation de levage et de descente (16) par le déplacement de l'unité de chargement (1) en direction de z,
- une unité de déplacement (19) étant prévue, laquelle peut être déplacée le cas échéant sur un autre chemin de transport auxiliaire et qui est dotée d'un bras (20) au moins.

14. Système de transbordement selon la revendication 13, **caractérisé par le fait que** le système de détection est un système vidéo à reconnaissance ROC et à documentation sélectives.

15. Système de transbordement selon les revendications 13 ou 14, **caractérisé par le fait que** le système de détection est basé sur la technologie RFID (Radio Frequency Identification).

16. Système de transbordement selon l'une ou plusieurs des revendications 13 à 15, **caractérisé par le fait que** le dispositif auxiliaire de chargement (14) possède au moins un organe de détection (10) sous la forme d'une unité de mesure optique mobile (11) , et le cas échéant un objectif multifocal saisissant sur un point de suspension de la charge de l'unité de chargement (1), les paramètres tels que la position des creux longitudinaux (12) et/ou des pivots, et/ou la nature des surfaces de l'unité de chargement (1), de la surface de chargement et/ou les défauts de balance de la charge, ou encore des perturbations atmosphériques.

17. Système de transbordement selon l'une ou plusieurs des revendications 13 à 16, **caractérisé par le fait que** le dispositif auxiliaire de chargement (14) possède au moins une installation de levage et de descente (16), qui consiste en un bras en porte-à-faux (15) portant la charge.

18. Système de transbordement selon l'une ou plusieurs des revendications 13 à 17, **caractérisé par le fait que** le dispositif auxiliaire de chargement (14) possède au moins un palier-support (17) permettant d'étayer le bras (20) d'une unité de déplacement correspondante (19).

19. Système de transbordement selon l'une ou plusieurs des revendications 13 à 18, **caractérisé par le fait que** des dispositifs auxiliaires de chargement (14) sont prévus des deux côtés avec leurs chemins de chargement auxiliaires, en parallèle aux rails de chargement, et que pour transborder ou charger une unité de chargement (1), deux ou de préférence quatre ou plus de dispositifs auxiliaires de chargement (14) sont positionnés à proximité de l'unité de chargement (1) à charger.

20. Système de transbordement selon l'une ou plusieurs des revendications 13 à 19, **caractérisé par le fait que** l'unité de déplacement (19) est automobile ou qu'elle peut être déplacée au moyen d'un véhicule tracteur.

21. Système de transbordement selon l'une ou plusieurs des revendications 13 à 20, **caractérisé par le fait que** pour trier les unités de chargement en direction de y, des véhicules de tri (21) sont prévus.

22. Système de transbordement selon les revendications 20 ou 21, **caractérisé par le fait que** l'unité de déplacement (19) et le véhicule de tri (21) sont un véhicule combiné.

23. Système de transbordement selon l'une ou plusieurs des revendications 13 à 22, **caractérisé par le fait qu'**une installation de traitement des données est prévue, notamment une installation de traitement des données centralisée qui traite toutes les données provenant des installations périphériques, par exemple du système de détection, des dispositifs auxiliaires de chargement (14) et de l'unité de déplacement (19), et qui assure la logistique.

24. Système de transbordement selon la revendication 23, **caractérisé par le fait que** sur l'installation de traitement des données, le nombre des dispositifs auxiliaires de chargement (14), leur positionnement et la coopération avec l'unité de déplacement (19) peuvent être commandés

25. Système de transbordement selon les revendications 23 ou 24, **caractérisé par le fait que** des dispositifs auxiliaires de chargement (14) qui sont ajoutés ou ôtés, se connectent et se déconnectent automatiquement via l'installation de traitement des données.

26. Terminal avec système de transbordement selon l'une ou plusieurs des revendications 13 à 25, ce premier étant situé entre deux terminus, formant un noeud (23) des points de vue de la technique de sécurité ferroviaire et logistique, et qui est doté d'au moins un autre voie de circulation ferroviaire comme par exemple une voie de service et/ou une voie d'évitement, lesquels sont liées à la voie principale, par exemple via des aiguillages télécommandés télécommandées.

27. Terminal selon la revendication 26, **caractérisé par le fait que** la voie de circulation ferroviaire et/ou la voie d'évitement sont exécutés dans la zone du terminal comme des ornières, les voies auxiliaires de transport étant exécutées comme rails ronds.
